# FASCICULE DE BREVET EUROPEEN

(11) **EP 3 360 328 B1**
(45) Date de publication et mention de la délivrance du brevet: **08.06.2022**
(21) Numéro de dépôt: 16785246.6
(22) Date de dépôt: 29.09.2016
(51) Int. Cl.: H04N 19/597, H04N 19/105, H04N 19/172, H04N 19/137

(54) **CODAGE ET DÉCODAGE MULTI-VUES**
MEHRFACHANSICHTSCODIERUNG UND -DECODIERUNG
MULTI-VIEW CODING AND DECODING

(30) Priorité: 08.10.2015 FR 1559592
(43) Date de publication de la demande: 15.08.2018
(73) Titulaire: ORANGE, 92130 Issy-les-Moulineaux (FR)
(72) Inventeur: JUNG, Joël, 78320 Le Mesnil Saint Denis (FR); DRICOT, Antoine, 75014 Paris (FR)
(86) Numéro de dépôt international: PCT/FR2016/052475
(87) Numéro de publication internationale: WO 2017/060587

(56) Documents cités:
- WO-A1-2008/084443
- WO-A1-2014/166096
- US-A1- 2007 121 722
- A. DRICOT ET AL: "Full parallax super multi-view video coding", 2014 IEEE INTERNATIONAL CONFERENCE ON IMAGE PROCESSING (ICIP), 1 octobre 2014 (2014-10-01), pages 135-139, XP055196844, DOI: 10.1109/ICIP.2014.7025026 ISBN: 978-1-47-995751-4
- G.J. HAN ET AL: "Overview of the High Efficiency Video Coding (HEVC) Standard", IEEE TRANSACTIONS ON CIRCUITS AND SYSTEMS FOR VIDEO TECHNOLOGY, 1 janvier 2012 (2012-01-01), pages 1-1, XP055045358, ISSN: 1051-8215, DOI: 10.1109/TCSVT.2012.2221191

## Description

### Domaine de l'invention

La présente invention se rapporte de manière générale au domaine du traitement d'images 3D, et plus précisément au codage et au décodage d'images multi-vues et de séquences d'images multi-vues.

L'invention peut notamment, mais non exclusivement, s'appliquer au codage vidéo mis en œuvre dans les codeurs vidéo actuels AVC et HEVC et leurs extensions (MVC, 3D-AVC, MV-HEVC, 3D-HEVC, etc), et au décodage vidéo correspondant.

### Art antérieur

Une image multi-vues est classiquement obtenue par multiplexage, à un instant courant t, d'un ensemble N de vues qui représentent chacune une même scène 3D selon une position angulaire de visualisation spécifique. Lorsque N est petit (typiquement inférieur à 10), on parle d'image multi-vues. Lorsque N est plus grand, on parle d'image super multi-vues. De façon générale, dans un souci de simplification de la description, une image multi-vues sera considérée comme comprenant N vues, avec N>1.

Plusieurs images multi-vues capturées chacune à différents instants forment une séquence d'images multi-vues.

Une telle séquence d'images multi-vues est codée à l'aide d'un codage adapté, tel que par exemple un codage MVC (abréviation anglaise de « Multiview Video Coding ») ou MV-HEVC (abréviation anglaise de « Multiview High Efficiency Video Coding ») qui exploite à la fois :
- les redondances spatiales qui existent à l'intérieur même de la vue courante, indépendamment des autres vues,
- les redondances intervues entre la vue courante à coder et une autre vue de l'image multi-vues courante,
- les redondances temporelles entre la vue courante à coder et une vue appartenant à une autre image multi-vues située à un instant différent de celui de ladite image multi-vues et représentant la scène 3D selon la même position angulaire de visualisation que la vue courante,
- les redondances spatio-temporelles entre la vue courante à coder et une vue appartenant à une autre image multi-vues située à un instant différent de celui de ladite image multi-vues et représentant la scène 3D selon une position angulaire de visualisation différente de celle de la vue courante.

Un décodage correspondant de la séquence d'images multi-vues codée est ensuite mis en œuvre afin de pouvoir jouer cette séquence sur l'écran d'un terminal, tel que par exemple une tablette, un téléphone portable, un smartphone (« téléphone intelligent»), un ordinateur personnel, un récepteur de télévision, etc... Il est ainsi théoriquement possible, pour un utilisateur, de naviguer librement d'une vue à l'autre dans une même image multi-vues de la séquence ou bien encore entre une première vue appartenant à une image multi-vues capturée à un instant courant t et une deuxième vue appartenant à une image multi-vues capturée à un instant précédant ou suivant l'instant courant t. La deuxième vue peut représenter la scène 3D selon une position angulaire de visualisation qui est la même que dans la première vue ou bien différente.

Bien que l'efficacité du procédé de codage mentionné ci-dessus soit prouvée, le procédé de décodage correspondant est très contraignant. En effet, lorsque l'utilisateur requiert l'affichage d'une vue d'une image multi-vues capturée à l'instant t dans la séquence, le décodeur est obligé de décoder au préalable systématiquement l'ensemble des vues de l'image multi-vues à l'instant t, et également l'ensemble des vues des autres images multi-vues précédant l'instant t dans la séquence. La complexité de calculs du décodeur s'avère donc très élevée. Il en est de même de la latence entre l'instant où l'utilisateur a requis l'affichage d'une vue et l'instant où la vue requise est réellement affichée. Compte tenu de ces contraintes, un tel procédé de décodage n'est clairement pas adapté à une navigation libre entre les vues d'une séquence d'images multi-vues, en particulier dans le cas où le nombre N de vues est supérieur à 10.

Afin de résoudre ces inconvénients, il est proposé, notamment dans le document « Applying Prediction Techniques to reduce uplink transmission and energy requirements for mobile free viewpoint video applications », De Raffaele, Debono, ICAM 2010, de faire dialoguer le terminal, contenant le décodeur, avec un serveur. Le terminal transmet au serveur les vues dans lesquelles a navigué l'utilisateur à l'intérieur de la séquence aux instants précédant l'instant courant. Ainsi, le serveur procède au codage de la vue requise à l'instant courant, en prédisant la vue courante par rapport aux vues qui lui ont été précédemment transmises. Le document « Interactive multiview video system with low decoding complexity », ICIP 2011, Maugey, T., Frossard, P., exploite également un tel dialogue entre le terminal, contenant le décodeur, et un serveur. A cet effet, le terminal transmet au serveur, à intervalles de temps réguliers, les vues dans lesquelles a navigué l'utilisateur à l'intérieur de la séquence aux instants précédant l'instant courant. Seules sont encodées les vues de l'image multi-vues qui sont susceptibles d'être sélectionnées par l'utilisateur à l'intervalle de temps suivant.

De telles techniques de dialogue entre le terminal contenant le décodeur et un serveur sont relativement lourdes et coûteuses à mettre en œuvre. En outre, elles entraînent une consommation de la bande passante réseau non négligeable, ce qui les rend difficilement réalistes, en particulier lorsque l'utilisateur navigue de nombreuses fois dans la séquence d'images multi-vues. Un exemple d'un procédé de codage multi-vues est décrit dans le document A. Dricot et al: "Full parallax super multi-view video coding", 2014 IEEE International Conférence on Image Processing (ICIP), 1 octobre 2014 (2014-10-01), pages 135-139. Il est également connu du document US 2017/121722 un procédé de décodage multi-vues, dans lequel seulement certaines vues de l'image multi-vues sont sélectionnées pour décoder la vue courante.

### Obiet et résumé de l'invention

Un des buts de l'invention est de remédier à des inconvénients de l'état de la technique précité.

L'invention est définie par les revendications annexées; les exemples appelés "modes de réalisation" sont des exemples illustratifs.

Selon l'invention, le premier et le deuxième résidu de prédiction contiennent chacun des données codées permettant d'obtenir une vue courante décodée unique et identique pour chacun des deux résidus. Chaque résidu doit respecter la contrainte de permettre de décoder une même vue. Cela signifie que si la vue courante a été prédite par rapport à une première vue et à une deuxième vue, obtenant ainsi respectivement un premier et un deuxième résidu de prédiction, la vue courante pourra être reconstruite :
- soit en ajoutant au premier résidu la première vue déjà décodée ou non, si c'est le premier résidu qui est sélectionné au décodage,
- soit en ajoutant au deuxième résidu la deuxième vue déjà décodée ou non, si c'est le deuxième résidu qui est sélectionné au décodage. Le décodeur peut alors avantageusement utiliser l'un de ces résidus pour décoder l'image courante, un tel choix de résidu étant fonction du parcours de navigation, par l'utilisateur, d'une vue à l'autre.

Le mode de réalisation particulier défini dans la revendication 3 permet d'optimiser la réduction de la complexité du décodeur et d'augmenter sa vitesse de décodage, lors du décodage de la vue courante. En outre, il permet une réduction du coût de stockage des vues décodées au décodeur.

Le mode de réalisation particulier défini dans la revendication 4 permet, lorsque la vue courante doit être décodée par rapport à des vues situées à des instants temporels différents, de rechercher, pour décoder la vue courante, au moins une vue qui a été décodée indépendamment d'autres vues, ceci afin de maximiser la qualité de reconstruction de la vue courante.

Le mode de réalisation particulier défini dans la revendication 5 permet au décodeur de déterminer un parcours de vues nécessaires au décodage de la vue courante qui sont les plus pertinentes possibles par rapport :
- à la géométrie du parcours de navigation effectué par l'utilisateur, d'une vue à l'autre, jusqu'à l'instant courant,
- et au déplacement possible de l'utilisateur vers telle ou telle prochaine vue à au moins un instant suivant ou précédant l'instant courant.

Ainsi, un parcours optimal est obtenu de façon certaine, en prenant en compte les déplacements futurs possibles de l'utilisateur vers une vue ou les autres.

Le mode de réalisation particulier défini dans la revendication 6 permet au décodeur de déterminer un parcours de vues nécessaires au décodage de la vue courante qui sont les plus pertinentes possibles par rapport :
- à la géométrie du parcours de navigation effectué par l'utilisateur, d'une vue à l'autre, jusqu'à l'instant courant,
- et au déplacement probable de l'utilisateur vers une prochaine vue d'une image multi-vues située à au moins un instant suivant ou précédant l'instant courant.

Ainsi, en prenant en compte les déplacements futurs probables de l'utilisateur vers telle ou telle vue, les chances d'obtenir un parcours optimal sont augmentées. Le mode de réalisation particulier défini dans la revendication 7 permet au décodeur de sélectionner une autre vue courante que celle à décoder, dans le cas où la détermination du parcours de vues nécessaires au décodage de la vue courante n'est pas adaptée à certaines contraintes de décodage. L'une de ces contraintes est par exemple de type matériel. Le décodeur peut notamment être limité dans le nombre de vues décodées à utiliser pour décoder la vue courante. Ainsi, dans le cas où le parcours déterminé utilise un nombre de vues décodées supérieur à ce nombre, le décodeur ne sera pas capable de décoder la vue courante.

Le mode de réalisation particulier défini dans la revendication 8 permet au décodeur, grâce à la détermination de l'ordre de parcours des vues décodées et disponibles, de supprimer les vues décodées, et, le cas échéant les images multi-vues auxquelles elles appartiennent, au fur et à mesure de leur utilisation, le long du parcours. En conséquence, la gestion de la mémoire tampon du décodeur s'en trouve nettement améliorée.

Le programme d'ordinateur défini dans la revendication 10 ou la revendication 14 peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'enregistrement défini dans la revendication 11 peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de codage ou de décodage précité.

### Brève description des dessins

D'autres caractéristiques et avantages apparaîtront à la lecture de plusieurs modes de réalisation préférés décrits en référence aux figures dans lesquelles:
- la figure 1A représente les étapes du procédé de codage selon un premier mode de réalisation de l'invention,
- la figure 1B représente les étapes du procédé de codage selon un deuxième mode de réalisation de l'invention,
- la figure 2A représente un dispositif de codage mettant en œuvre le procédé de codage de la figure 1A,
- la figure 2B représente un dispositif de codage mettant en œuvre le procédé de codage de la figure 1B,
- la figure 3A représente un exemple d'image multi-vues,
- la figure 3B représente un exemple de séquence d'images multi-vues,
- la figure 4A représente une portion du signal de données obtenu à l'issue du procédé de codage de la figure 1A,
- la figure 4B représente une variante de la portion de signal de la figure 4A,
- la figure 4C représente une portion du signal de données obtenu à l'issue du procédé de codage de la figure 1B,
- la figure 4D représente une variante de la portion de signal de la figure 4C,
- la figure 5A représente un exemple d'arborescence de codage associée à la au moins une vue courante à coder conformément au procédé de codage de la figure 1A,
- la figure 5B représente un exemple d'arborescence de codage associée à la au moins une vue courante à coder conformément au procédé de codage de la figure 1B,
- la figure 6A représente les étapes du procédé de décodage selon un premier mode de réalisation de l'invention,
- la figure 6B représente les étapes du procédé de décodage selon un deuxième mode de réalisation de l'invention,
- la figure 7A représente un dispositif de décodage mettant en œuvre le procédé de décodage de la figure 6A,
- la figure 7B représente un dispositif de décodage mettant en œuvre le procédé de décodage de la figure 6B,
- la figure 8A représente un exemple de parcours de décodage associé à la au moins une vue courante à décoder, laquelle a été codée conformément à l'arborescence de codage de la figure 5A,
- la figure 8B représente un exemple de parcours de décodage associé à la au moins une vue courante à décoder, laquelle a été codée conformément à l'une des arborescences de codage alternatives de la figure 5B,
- la figure 8C représente une variante du parcours de décodage représenté de la figure 8B,
- la figure 8D représente un exemple de parcours de décodage associé à la au moins une vue courante à décoder qui contient un nombre minimal de vues, la vue courante ayant été codée conformément à l'une des arborescences de codage alternatives de la figure 5B,
- la figure 8E représente un exemple de parcours de décodage associé à la au moins une vue courante à décoder qui tient compte du décodage de la vue susceptible d'être décodée à au moins un instant suivant ou précédent l'instant courant.

### Description du principe général de l'invention

L'invention propose principalement une technique de décodage d'au moins une vue courante d'une image multi-vues courante qui a été précédemment codée et dont les données codées sont contenues dans un signal de données, ladite technique de décodage proposant de ne décoder que la ou les vues réellement nécessaires au décodage de la au moins une vue courante.

Selon l'invention, parmi les vues nécessaires au décodage de la au moins une vue courante, au moins l'une d'entre elles est une vue qui n'a pas encore été décodée et qui n'est donc pas disponible à l'instant où il est procédé au décodage de la au moins une vue courante. Une telle vue non encore décodée peut appartenir à l'image multi-vues courante et donc représenter une scène selon une position angulaire de visualisation différente de celle de la au moins une vue courante. Une telle vue non encore décodée peut également appartenir à une image multi-vues qui est différente de l'image multi-vues courante, c'est-à-dire située, dans une séquence d'images multi-vues, à un autre instant que l'image multi-vues courante. Dans ce cas, la vue nécessaire au décodage de l'image courante peut être une vue représentant la scène selon la même position de visualisation angulaire que la au moins une vue courante ou bien selon une position angulaire de visualisation différente de celle de la au moins une vue courante.

### Description détaillée d'un premier mode de réalisation

Selon un premier mode de réalisation, la technique de décodage selon l'invention s'appuie sur un procédé de codage d'images multi-vues classique, tel que mis en œuvre dans un codeur conforme à l'une quelconque des normes de codage vidéo actuelles ou à venir.

### Codage

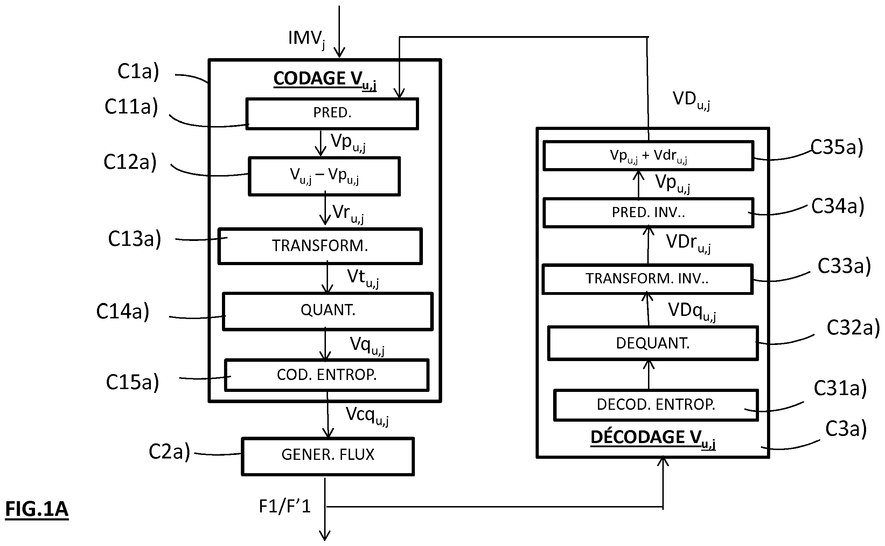

Le procédé de codage conforme au premier mode de réalisation est représenté sous la forme d'un algorithme comportant des étapes C1a) à C3a) telles que représentées à la figure 1A.

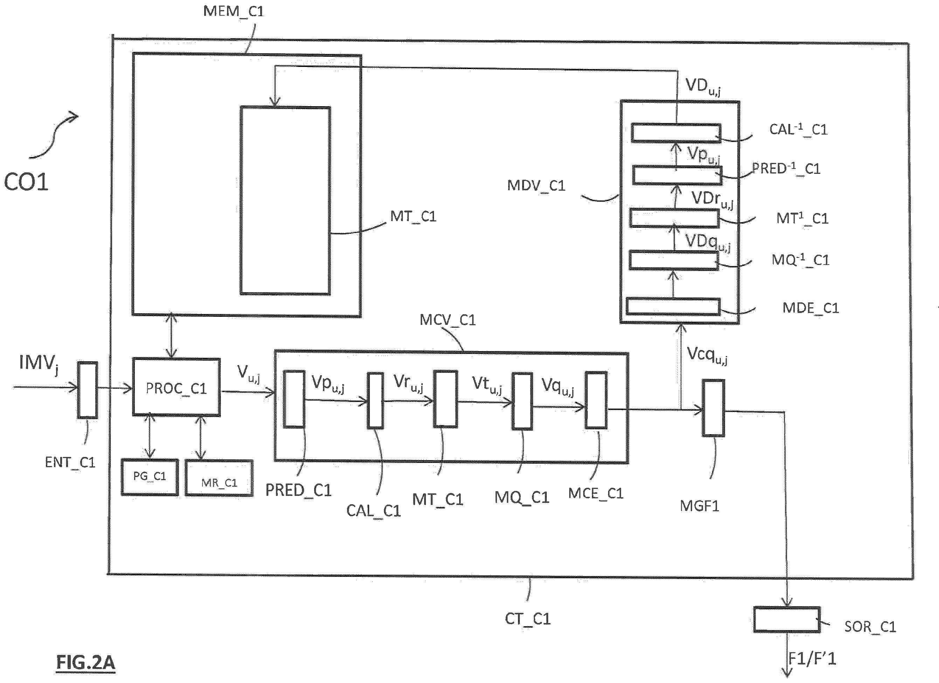

Selon le premier mode de réalisation de l'invention, le procédé de codage est implémenté dans un dispositif de codage ou codeur CO1 représenté à la figure 2A.

Comme illustré en figure 2A, un tel dispositif codeur comprend :
- une entrée ENT_C1 pour recevoir une image multi-vues courante à coder,
- un circuit de traitement CT_C1 pour mettre en œuvre le procédé de codage selon le premier mode de réalisation, le circuit de traitement CT_C1 contenant :
   - une mémoire MEM_C1 comprenant une mémoire tampon MT_C1,
   - un processeur PROC_C1 piloté par un programme d'ordinateur PG_C1,
- une sortie SOR_C1 pour délivrer un flux codé contenant les données obtenues à l'issue du codage de l'image multi-vues courante.

A l'initialisation, les instructions de code du programme d'ordinateur PG_C1 sont par exemple chargées dans une mémoire RAM, MR_C1, avant d'être exécutées par le circuit de traitement CT_C1.

Le procédé de codage représenté sur la figure 1A s'applique à toute image multi-vues courante IMVⱼ fixe ou bien faisant partie d'une séquence d'images multi-vues IMV₁, ..., IMVⱼ,..., IMV_{K}(1≤j≤K) à coder.

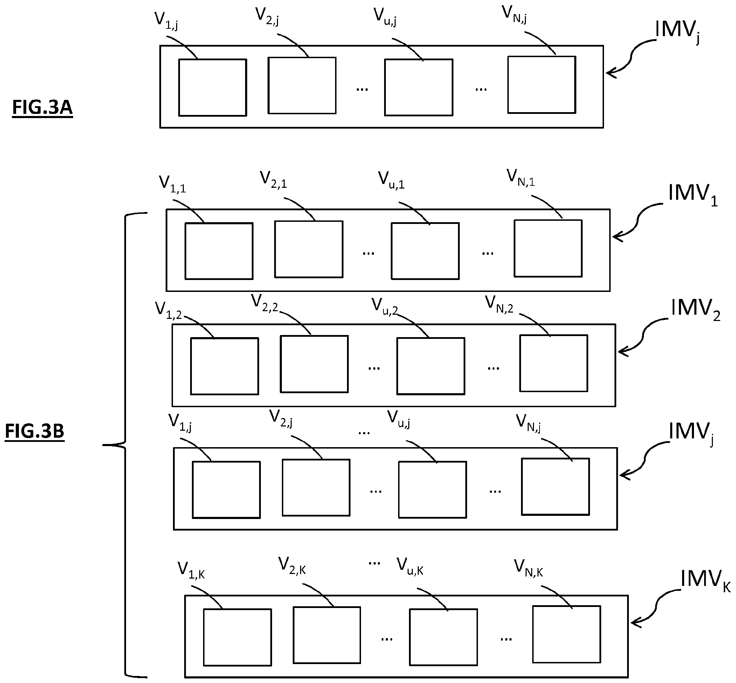

Comme représenté sur la figure 3A, une image multi-vues courante IMVⱼ à un instant courant tⱼ est composée de N différentes vues V₁,ⱼ, V_{2,j,....,} V_{u,j},..., V_{N,j} qui représentent chacune une même scène selon une position de visualisation angulaire correspondante, tel que N>1 et 1≤u≤N.

Comme représenté sur la figure 3B, une séquence d'images multi-vues comprend une pluralité K d'images multi-vues IMV₁, IMV₂,..., IMV_{j,},..., IMV_{K}, tel que 1≤j≤K, qui se succèdent respectivement aux instants t1, t2,...,tj,..., tK.

A l'instant t1, l'image multi-vues IMV₁ est composée de N différentes vues V_{1,1}, V_{2,1,....,} V_{u,1},..., V_{N,1} qui représentent chacune une même scène selon une position de visualisation angulaire correspondante.

A l'instant t2, l'image multi-vues IMV₂ est composée de N différentes vues V_{1,2}, V_{2,2,....,} V_{u,2},..., V_{N,2} qui représentent chacune une même scène selon une position de visualisation angulaire correspondante.

A l'instant tj, l'image multi-vues IMVⱼ est composée de N différentes vues V_{1,j}, V_{2,j,....,} Vu_{,j},..., V_{N,j} qui représentent chacune une même scène selon une position de visualisation angulaire correspondante.

A l'instant tK, l'image multi-vues IMV_{K} est composée de N différentes vues V₁,_{K}, V_{2,K,....,} V_{u,K},..., V_{N,K} qui représentent chacune une même scène selon une position de visualisation angulaire correspondante.

Au cours d'une étape C1a) représentée à la figure 1A, pour une image multi-vues courante IMVⱼ, il est procédé au codage de ladite au moins une vue V_{u,j}.

Une telle étape C1a) est mise en œuvre par un dispositif de codage de vues MCV_C1 tel que représenté sur la figure 2A, lequel dispositif est piloté par le processeur PROC_C1.

Un tel dispositif MCV_C1 de codage de vues comprend classiquement :
- un dispositif PRED_C1 de prédiction,
- un dispositif CAL_C1 de calcul de données résiduelles,
- un dispositif MT_C1 de transformation de type DCT (abréviation anglaise de « Discrète Cosine Transform »), DST (abréviation anglaise de « Discrète Sine Transform »), DWT (abréviation anglaise de « Discrète Wavelet Transform »),
- un dispositif MQ_C1 de quantification,
- un dispositif MCE_C1 de codage entropique par exemple de type CABAC ("Context Adaptive Binary Arithmetic Coder" en anglais) ou encore un codeur de Huffman connu en tant que tel.

De façon connue en soi, au cours de l'étape C1a), il est procédé à une sous-étape C11a) de prédiction de ladite au moins une vue V_{u,j} par des techniques connues de prédiction intra et/ou inter. A cet effet, ladite au moins une vue V_{u,j} est prédite conformément à un mode de prédiction sélectionné parmi une pluralité de modes de prédiction prédéterminés. Par exemple, dans le cas d'un codage de type MVC, et comme déjà expliqué précédemment, ladite au moins une vue Vᵤ,ⱼ peut être prédite :
- indépendamment des autres vues de l'image multi-vues IMVⱼ ou de la séquence de K images multi-vues IMV₁, IMV₂,..., IMV_{j,},... IMV_{K},
- par rapport à une autre vue de l'image multi-vues courante IMVⱼ,
- par rapport à une vue appartenant à une autre image multi-vues que ladite image multi-vues courante et représentant la scène selon la même position angulaire de visualisation que ladite au moins une vue courante,
- par rapport à une autre image multi-vues que ladite image multi-vues courante IMVⱼ et représentant la scène selon une position angulaire de visualisation différente de celle de la au moins une vue courante.

La vue prédictrice utilisée pour prédire la au moins une vue courante Vᵤ,ⱼ est une vue qui a été déjà codée puis décodée. Une telle vue prédictrice est préalablement stockée dans la mémoire tampon MT_C1 du codeur CO1 telle que représentée à la figure 2A.

Pour la au moins une vue courante V_{u,j} à coder, une vue prédictrice optimale Vp_{u,j} est obtenue suite à une mise en compétition desdits modes de prédiction prédéterminés, par exemple par minimisation d'un critère débit distorsion bien connu de l'homme du métier. La vue prédictrice optimale est considérée comme une approximation de la au moins une vue courante V_{u,j} considérée.

Une telle sous-étape C11a) est mise en œuvre par le dispositif de prédiction PRED_C1 représenté sur la figure 2A.

L'étape de codage C1a) comprend également une sous-étape C12a) au cours de laquelle il est procédé classiquement au calcul de la différence entre la au moins une vue courante V_{u,j} et la vue prédictrice optimale Vp_{u,j} qui a été sélectionnée à l'issue de la sous-étape C11a).

Une vue résiduelle Vr_{u,j} est alors obtenue à l'issue de la sous-étape C12a).

Une telle sous-étape C12a) est mise en œuvre par le module de calcul CAL_C1 représenté sur la figure 2A.

L'étape de codage C1a) comprend également une sous-étape C13a) au cours de laquelle il est procédé classiquement à la transformation de la vue résiduelle Vr_{u,j} selon une opération classique de transformation directe telle que par exemple une transformation de type DCT, DST ou DWT, pour produire une vue transformée, désignée par la référence Vt_{u,j}. Une telle opération est effectuée par le dispositif MT_C1 représenté sur la figure 2A.

L'étape de codage C1a) comprend également une sous-étape C14a) au cours de laquelle il est procédé classiquement à la quantification de la vue transformée Vt_{u,j} selon une opération classique de quantification, telle que par exemple une quantification scalaire ou vectorielle. Un ensemble Vq_{u,j} de coefficients quantifiés est alors obtenu à l'issue de cette sous-étape. Une telle sous-étape C14a) est effectuée au moyen du dispositif MQ_C1 de quantification tel que représenté à la figure 2A.

L'étape de codage C1a) comprend également une sous-étape C15a) au cours de laquelle il est procédé classiquement au codage de l'ensemble Vq_{u,j} de coefficients selon un ordre prédéterminé, tel que notamment l'ordre « raster scan ». Un ensemble Vcq_{u,j} de données codées est alors obtenue à l'issue de la sous-étape C15a).

Dans le mode préféré de réalisation, le codage effectué est un codage entropique de type arithmétique ou de Huffman. La sous-étape C15a) consiste alors à :
- lire le ou les symboles d'un ensemble prédéterminé de symboles qui sont associés aux données quantifiées de la vue V_{u,j},
- associer des informations numériques, telles que des bits, au(x) symbole(s) lu(s).

Une telle sous-étape C15a) de codage entropique est mise en œuvre par le module de codage entropique MCE_C1 représenté sur la figure 2A.

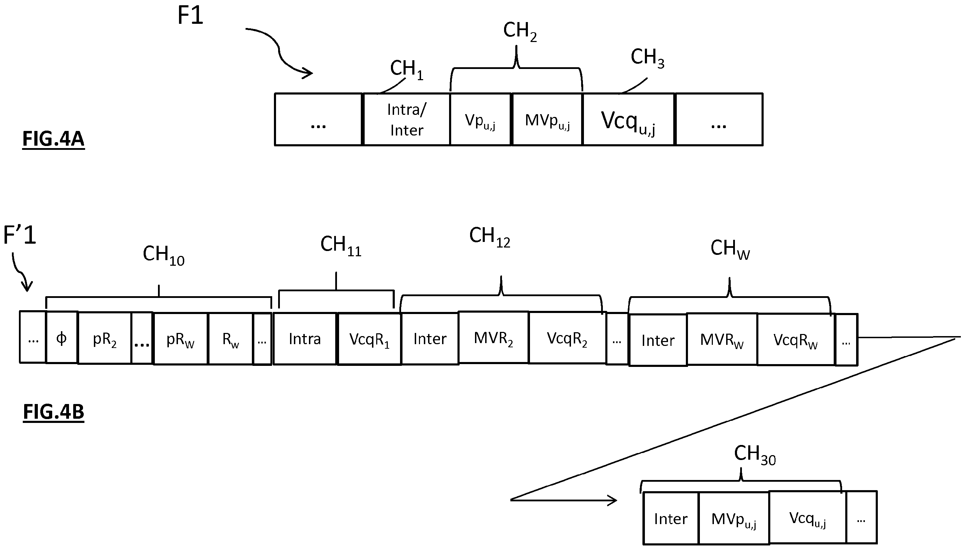

A l'issue de l'étape de codage C1a) de la vue V_{u,j}, il est procédé, au cours d'une étape C2a) représenté sur la figure 1A, à l'élaboration d'un signal de données F1 qui, de façon connue en soi, comme représenté sur la figure 4A, comprend :
- un champ CH₁ contenant le type de prédiction (inter ou intra) appliqué à la sous-étape C11a) de la figure 1A, et le cas échéant, le mode de prédiction sélectionné,
- si le mode de prédiction Inter a été appliqué, un champ CH₂ contenant l'indice d'au moins la vue prédictrice Vp_{u,j} sélectionnée à l'issue de la sous-étape C11a) et le au moins un vecteur de mouvement utilisé MVp_{u,j},
- un champ CH₃ contenant l'ensemble des données codées entropiquement Vcq_{u,j} associées à la vue V_{u,j}.

Un tel signal est ensuite délivré via la sortie SOR_C1 du codeur CO1 de la figure 2A, puis transmis par un réseau de communication (non représenté), à un terminal distant. Celui-ci comporte un décodeur qui sera décrit plus en détail dans la suite de la description.

L'étape C2a) de production d'un tel signal est mise en œuvre par le module MGF1 de génération de signal de données, tel que représenté sur la figure 2A.

Selon une variante de réalisation innovante propre à l'invention, pour chacune des vues de la séquence d'images considérée, ou pour chacune des vues d'un sous-ensemble de vues de la séquence d'images considérée, lesdites vues ayant été elles-mêmes codées selon un mode de prédiction intra ou inter, il est proposé, de signaler dans un champ particulier du signal F'1 :
- soit une information représentative du fait que la vue considérée dans la séquence d'images a été codée en Intra,
- soit une information représentative de l'indice de la au moins une vue prédictrice qui a été utilisée pour prédire la vue considérée dans la séquence d'images.

Dans l'exemple représenté sur la figure 4B, où est représentée, pour des raisons de simplification, seulement une portion du signal F'1 dans laquelle est signalé uniquement un sous-ensemble de vues de la séquence d'images considérée, lequel contient ladite au moins une vue courante V_{u,j} qui a été codée, ainsi qu'un nombre W de vues VR₁,..., VR_{W} qui ont été codées avant ladite au moins une vue courante V_{u,j}, ladite première vue VR₁ ayant été codée en mode intra et les autres vues VR₂ à VR_{W} ayant été codées chacune par exemple en mode inter par rapport à la au moins une vue prédictrice correspondante VpR₂ à VpR_{W}. Il est supposé également que ladite au moins une vue courante V_{u,j} a été codée en inter par rapport à au moins la vue VR_{W}.

Selon la variante de réalisation représentée, la portion du signal F'1 comprend avantageusement un champ CH₁₀ contenant une première information, désignée par exemple par le symbole φ, et représentative du fait que la première vue VR₁ du sous-ensembles de vues de la séquence d'images considérée a été codée en intra, l'indice pR₂ d'au moins la vue VpR₂ qui a servi à la prédiction de la vue VR₂, l'indice pR_{W} d'au moins la vue VpR_{W} qui a servi à la prédiction de la vue VR_{W}, l'indice R_{W} d'au moins la vue prédictrice VR_{W} qui a servi à la prédiction de ladite au moins une vue courante V_{u,j}.

Conformément à cette variante, il est alors procédé, au cours de l'étape C2a) représentée sur la figure 1A, à l'élaboration d'une portion du signal de données F'1, spécifiquement associée au codage de ladite au moins une vue courante V_{u,j}.

Une telle élaboration consiste à ajouter au signal F'1, de façon similaire à la figure 4A, un champ CH₃₀ contenant le type de prédiction, ici inter, associé à ladite au moins une vue courante V_{u,j}, le au moins un vecteur de mouvement MVp_{u,j} décrivant le mouvement entre ladite au moins une vue prédictrice VR_{W} et ladite au moins une vue courante V_{u,j}, l'ensemble des données codées entropiquement Vcq_{u,j} associées à la dite au moins une vue courante V_{u,j}. Le champ CH₃₀ vient s'ajouter aux champs suivants déjà présents dans le signal F'1 :
- le champ CH₁₁ ajouté précédemment lors du codage de la première vue VR₁ du sous-ensemble de vues de la séquence d'images considérée et contenant le type de prédiction (intra) associé à cette vue, ainsi que l'ensemble des données codées entropiquement VcqR₁ associé à cette vue,
- le champ CH₁₂ ajouté précédemment lors du codage de la deuxième vue VR₂ du sous-ensemble de vues de la séquence d'images considérée et contenant le type de prédiction (inter) associé à cette vue, le au moins un vecteur de mouvement MVR₂ décrivant le mouvement entre la au moins une vue prédictrice VpR₂ et la vue VR₂, l'ensemble des données codées entropiquement VcqR₂ associé à la vue VR₂,
- ...,
- le champ CH_{W} ajouté précédemment lors du codage de la vue VR_{W} du sous-ensemble de vues de la séquence d'images considérée et contenant le type de prédiction (inter) associé à la vue VR_{W} de la séquence d'images considérée, le au moins un vecteur de mouvement MVR_{W} décrivant le mouvement entre la au moins une vue prédictrice VpR_{W} et la vue VR_{W}, l'ensemble des données codées entropiquement VcqR_{W} associé à la vue VR_{W}.

Selon un mode de réalisation, une telle élaboration consiste en outre à ajouter au signal F'1, dans le champ CH₁₀, l'indice R_{W} d'au moins la vue prédictrice VR_{W} qui a servi à la prédiction de ladite au moins une vue courante V_{u,j}, en complément des indices pR₂, ..., pR_{W} de vues prédictrices déjà présents dans le champ CH₁₀.

Selon un autre mode de réalisation, l'ajout de l'indice R_{W} n'est pas nécessaire dans le cas où il est déjà présent dans le champ CH₁₀. Selon cet autre mode de réalisation, le champ CH₁₀ a été complété par tous les indices des vues prédictrices des vues du sous-ensemble de vues considéré, préalablement au codage de ces vues.

Grâce à la présence du champ CH₁₀, les dépendances de codage associées à ladite au moins une vue courante V_{u,j} sont indiquées de façon regroupée dans le signal F'1 et seront ainsi rendues accessibles rapidement et directement lors du décodage de ladite au moins une vue courante V_{u,j}.

De façon connue en soi, au cours d'une étape C3a) représentée à la figure 1A, il est procédé au décodage de la au moins une vue courante V_{u,j}.

Une telle étape C3a) est mise en œuvre par un dispositif de décodage de vues MDV_C1 tel que représenté sur la figure 2A.

Un tel dispositif MDV_C1 de décodage de vues comprend classiquement :
- un dispositif MDE_C1 de décodage entropique, par exemple de type CABAC ("Context Adaptive Binary Arithmetic Coder" en anglais) ou encore un décodeur de Huffman connu en tant que tel,
- un module MQ⁻¹_C1 de déquantification,
- un module MT⁻¹_C1 de transformation inverse de type DCT⁻¹ (abréviation anglaise de « Discrète Cosine Transform »), DST⁻¹ (abréviation anglaise de « Discrète Sine Transform »), DWT⁻¹ (abréviation anglaise de « Discrète Wavelet Transform »),
- un module PRED⁻¹_C1 de prédiction inverse,
- un module CAL⁻¹_C1 de calcul de reconstruction de vue.

Au cours de l'étape C3a), il est procédé à une sous-étape C31a) de décodage entropique des données codées entropiquement Vcq_{u,j} associées à la au moins une vue courante V_{u,j}, selon un ordre prédéterminé. Dans le mode préféré de réalisation, le décodage effectué est un décodage entropique de type arithmétique ou de Huffman. La sous-étape C31a) consiste alors à :
- lire le ou les symboles d'un ensemble prédéterminé de symboles qui sont associés aux données codées entropiquement Vcq_{u,j} de la vue V_{u,j},
- associer des informations numériques, telles que des bits, au(x) symbole(s) lu(s).

A l'issue de la sous-étape C31a) précitée, est obtenue une pluralité d'informations numériques associées aux données quantifiées qui ont été codées au cours de l'étape C15a) précitée.

Une telle sous-étape C31a) de décodage entropique est mise en œuvre par le dispositif de décodage entropique MDE_C1 représenté sur la figure 2A.

Au cours de la sous-étape C31a) précitée, est également décodé l'indice de la vue prédictrice Vp_{u,j} qui a été utilisée pour prédire la au moins une vue courante Vᵤ,ⱼ à la sous-étape C11a) de la figure 1A.

L'étape de codage C3a) comprend également une sous-étape C32a) au cours de laquelle il est procédé à la déquantification des informations numériques obtenues à la suite de la sous-étape C31a), selon une opération classique de déquantification qui est l'opération inverse de la quantification mise en œuvre à la sous-étape C14a). Un ensemble VDq_{u,j} de coefficients déquantifiés est alors obtenu à l'issue de cette sous-étape. Une telle sous-étape C32a) est mise en œuvre par le dispositif MQ⁻¹_C1 de déquantification tel que représenté à la figure 2A.

L'étape de codage C3a) comprend également une sous-étape C33a) au cours de laquelle il est procédé à une transformation de l'ensemble VDq_{u,j} de coefficients quantifiés qui est de type DCT⁻¹, DST⁻¹ ou DWT⁻¹. Cette transformation est l'opération inverse de la transformation effectuée à la sous-étape C13a). A l'issue de cette sous-étape, est obtenue une vue résiduelle décodée, telle que désignée par la référence VDr_{u,j}. Une telle opération est effectuée par le dispositif MT⁻¹_C1 représenté sur la figure 2A.

L'étape de codage C3a) comprend également une sous-étape C34a) de prédiction de ladite au moins une vue courante V_{u,j} à décoder, par sélection, dans la mémoire tampon MT_C1 de la figure 2A, de la au moins une vue prédictrice optimale Vp_{u,j} obtenue à la suite de la sous-étape C11a) précitée, qui est associée à l'indice décodé à l'issue de la sous-étape C31a).

Une telle sous-étape C34a) est mise en œuvre par le dispositif de prédiction PRED⁻¹_C1 représenté sur la figure 2A.

L'étape de codage C3a) comprend également une sous-étape de calcul C35a), au cours de laquelle il est procédé à la construction (autrement appelée prédiction inverse) de la au moins une vue décodée VD_{u,j} en ajoutant à la au moins une vue résiduelle décodée VDr_{u,j} obtenue à l'issue de la sous-étape C33a), au moins la vue prédictrice Vp_{u,j} qui a été identifiée à la sous-étape C31a) précitée.

Une telle sous-étape C35a) est mise en œuvre par le dispositif de calcul CAL⁻¹_C1 représenté sur la figure 2A.

Les étapes de codage C1a) à C3a) qui viennent d'être décrites ci-dessus sont ensuite mises en œuvre pour chacune des vues V_{u,1}, V_{u,2}, ..., V_{u,N} à coder de l'image multi-vues courante IMVⱼ considérée.

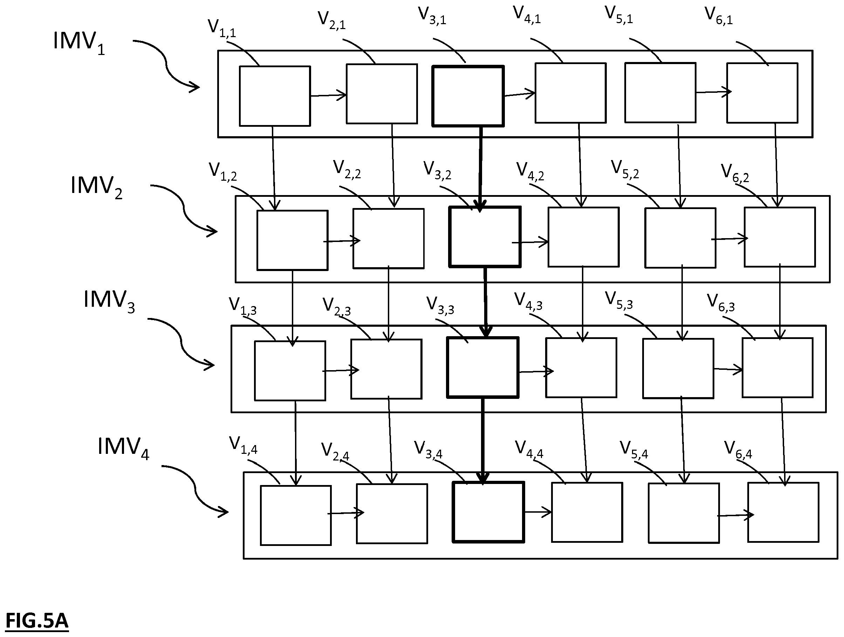

En référence maintenant à la figure 5A, est représenté un exemple de codage d'au moins une vue courante Vᵤ,ⱼ selon le procédé de codage de la figure 1A. Dans l'exemple représenté, l'image multi-vues courante IMVⱼ est la quatrième image IMV₄ d'une séquence d'images multi-vues, chaque image multi-vues comprenant par exemple six vues. La au moins une vue courante codée qui est considérée dans cet exemple est par exemple la troisième vue V_{3,4} en partant de la gauche, de l'image multi-vues courante IMV₄. La vue V_{3,4} est représentée en gras sur la figure 5A.

Dans l'exemple représenté, la vue courante V_{3,4} est codée en mode Inter à partir de la vue V_{3,3} de l'image multi-vues IMV3. La vue V_{3,3} a elle-même été codée en Inter par rapport à la vue V_{3,2} de l'image multi-vues IMV2. La vue V_{3,2} a elle-même été codée en Inter par rapport à la vue V_{3,1} de l'image multi-vues IMV1. La vue V_{3,1} a été elle-même codée en Intra, ce mode étant représenté par des hachures sur la figure 5A. Les dépendances de codage d'une vue à l'autre sont quant à elles représentées par des flèches sur la figure 5A. En d'autres termes, la vue courante V_{3,4} est codée selon une arborescence de codage comprenant la vue V_{3,1}, la vue V_{3,2} et la vue V_{3,3}. Une telle arborescence est représentée en gras sur la figure 5A.

### Décodage

Un premier mode de réalisation de l'invention va maintenant être décrit, dans lequel le procédé de décodage est utilisé pour décoder au moins une vue courante appartenant à une image multi-vues qui a été précédemment codée conformément au procédé de codage de la figure 1A et dont les données codées sont contenues dans le signal de données F1 ou F'1. La au moins une vue courante est apte à être décodée par un décodeur conforme à l'une quelconque des normes de décodage vidéo actuelles ou à venir.

Le procédé de décodage selon le premier mode de réalisation de l'invention est par exemple implémenté de manière logicielle ou matérielle par modifications d'un tel décodeur.

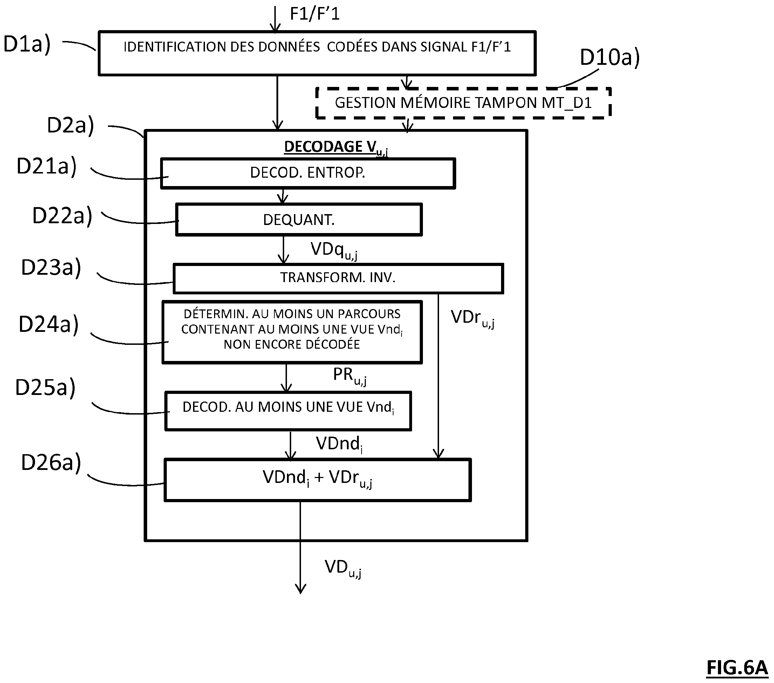

Le procédé de décodage selon l'invention est représenté sous la forme d'un algorithme comportant des étapes D1a) à D2a) telles que représentées à la figure 6A.

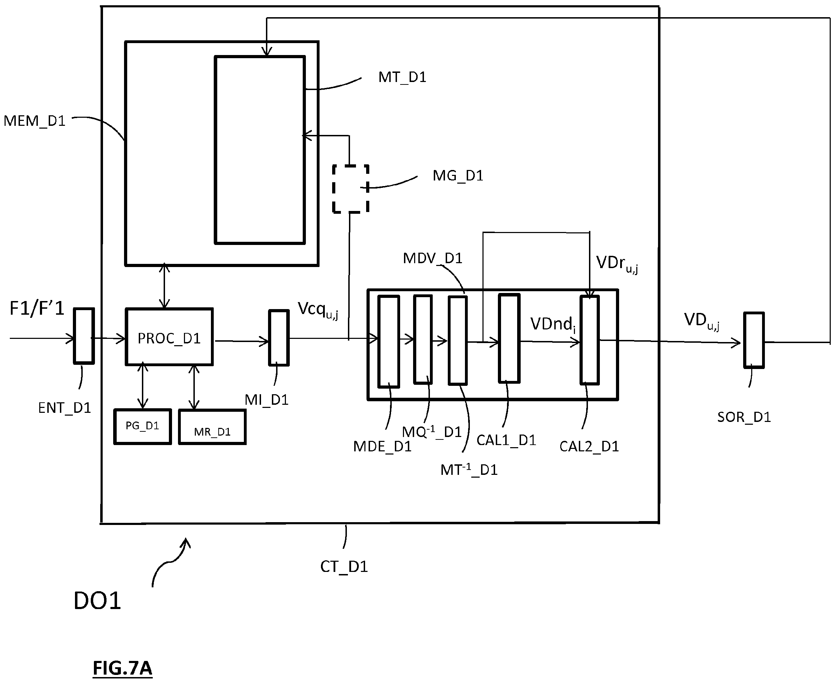

Selon ce premier mode de réalisation, le procédé de décodage selon l'invention est implémenté dans un dispositif de décodage ou décodeur DO1 représenté à la figure 7A.

Comme illustré en figure 7A, un tel dispositif décodeur comprend :
- une entrée ENT_D1 pour recevoir le signal de données F1 ou F'1 représentatif de l'image multi-vues courante qui a été précédemment codée,
- un circuit de traitement CT_D1 pour mettre en œuvre le procédé de décodage selon l'invention, le circuit de traitement CT_D1 contenant :
   - une mémoire MEM_D1 comprenant une mémoire tampon MT_D1,
   - un processeur PROC_D1 piloté par un programme d'ordinateur PG_D1,
- une sortie SOR_D1 pour délivrer au moins une vue courante reconstruite contenant les données obtenues à l'issue du décodage selon le premier mode de réalisation.

A l'initialisation, les instructions de code du programme d'ordinateur PG_D1 sont par exemple chargées dans une mémoire RAM, MR_D1, avant d'être exécutées par le circuit de traitement CT_D1.

Le procédé de décodage représenté sur la figure 6A s'applique à toute vue courante V_{u,j} d'une image multi-vues courante IMVⱼ fixe ou bien faisant partie d'une séquence d'images multi-vues IMV₁, ..., IMVⱼ,..., IMV_{K}(1≤j≤K).

A cet effet, des informations représentatives de la au moins une vue courante V_{u,j} à décoder sont identifiées :
- soit dans la portion correspondante, représentée à la figure 4A, du signal de données F1 reçu au décodeur et tel que délivré à la suite du procédé de codage de la figure 1A,
- soit dans la portion correspondante, représentée à la figure 4B, du signal de données F'1 reçu au décodeur et tel que délivré à la suite du procédé de codage de la figure 1A.

Au cours d'une étape D1a) représentée à la figure 6A, il est procédé, de façon connue en soi, à l'identification, dans la portion correspondante du signal de données F1 :
- de l'ensemble des données Vcq_{u,j} associées à la au moins une vue courante V_{u,j}, telles que codées entropiquement à la suite de la sous-étape de codage C15a) de la figure 1A et contenues dans le champ CH₃ du signal de données F1 représenté sur la figure 4A,
- de l'information d'identification de la au moins une vue prédictrice Vp_{u,j} obtenue à la suite de la sous-étape de prédiction C11a) du procédé de codage représenté à la figure 1A et contenue dans le champ CH₂ du signal de données F1 représenté sur la figure 4A, une telle information consistant par exemple dans l'indice de la au moins une vue prédictrice Vp_{u,j},
- du au moins un vecteur de mouvement utilisé MVp_{u,j} en association avec la au moins une vue prédictrice Vp_{u,j}, tel que contenu également dans le champ CH₂,
- du type de prédiction inter ou intra.

Selon une variante innovante de l'étape D1a) représentée à la figure 6A, il est procédé à l'identification, dans la portion correspondante du signal de données F'1 de la figure 4B :
- à partir du champ CH₃₀, de l'ensemble des données Vcq_{u,j} associées à la au moins une vue courante V_{u,j}, telles que codées entropiquement à la suite de la sous-étape de codage C15a) de la figure 1A, du type de prédiction inter associé à ladite au moins une vue courante V_{u,j}, du au moins un vecteur de mouvement MVp_{u,j} décrivant le mouvement entre la au moins une vue VR_{W} et ladite au moins une vue courante V_{u,j},
- à partir du champ CH₁₀, de l'indice R_{W} d'au moins la vue VR_{W} qui a servi à la prédiction de ladite au moins une vue courante V_{u,j}, et éventuellement, si de telles informations ne sont pas encore connues au moment du décodage de ladite au moins une vue courante V_{u,j}, de l'information selon laquelle la première vue VR₁ a été prédite en Intra, de l'indice pR₂ d'au moins la vue VpR₂ qui a servi à la prédiction de la vue VR₂, ..., de l'indice pR_{W} d'au moins la vue VpR_{W} qui a servi à la prédiction de la vue VR_{W}.

L'étape d'identification D1a) est mise en œuvre par un dispositif MI_D1 d'analyse de signal, tel que représenté à la figure 7A.

Selon l'invention, à la suite de l'étape D1a), il est procédé, au cours d'une étape D2a) représentée à la figure 6A, au décodage de la au moins une vue courante V_{u,j} codée entropiquement.

Une telle étape D2a) est mise en œuvre par un dispositif de décodage de vues MDV_D1 tel que représenté sur la figure 7A.

Au cours de l'étape de décodage D2a), il est procédé classiquement à une sous-étape D21a) de décodage entropique des données codées entropiquement Vcq_{u,j} associées à ladite au moins une vue courante V_{u,j} à décoder, selon un ordre prédéterminé. Dans le mode préféré de réalisation, le décodage effectué est un décodage entropique de type arithmétique ou de Huffman. La sous-étape D21a) consiste alors à :
- lire le ou les symboles d'un ensemble prédéterminé de symboles qui sont associés à l'ensemble de données quantifié Vcq_{u,j} relatif à ladite au moins une vue courante V_{u,j},
- associer des informations numériques, telles que des bits, au(x) symbole(s) lu(s).

A l'issue de la sous-étape D21a) précitée, est obtenue une pluralité d'informations numériques associées aux données quantifiées qui ont été codées au cours de l'étape de codage entropique C15a) de la figure 1A.

Une telle sous-étape D21a) de décodage entropique est mise en œuvre par un dispositif de décodage entropique MDE_D1 du dispositif de décodage de vues MDV_D1 de la figure 7A.

Au cours de la sous-étape D21a) précitée, est également décodé l'indice de la au moins une vue prédictrice Vp_{u,j} qui a été utilisée pour prédire la au moins une vue courante V_{u,j} lors de la sous-étape C11a) de la figure 1A. La au moins une vue prédictrice Vp_{u,j} est une vue qui a été déjà décodée ou non. Dans le cas où la au moins une vue prédictrice Vp_{u,j} a été décodée, elle est préalablement stockée dans la mémoire tampon MT_D1 du décodeur DO1 de la figure 7A. Sinon, elle est décodée à partir d'une ou de plusieurs vues déjà décodées sur le parcours de décodage déterminé dans une étape suivante.

L'étape de décodage D2a) comprend également une sous-étape D22a) au cours de laquelle il est procédé à la déquantification des informations numériques obtenues à la suite de la sous-étape D21a), selon une opération classique de déquantification qui est l'opération inverse de la quantification mise en œuvre lors la sous-étape de quantification C14a) de la figure 1A. Un ensemble VDq_{u,j} de coefficients déquantifiés est alors obtenu à l'issue de la sous-étape D22a). Une telle sous-étape D22a) est mise en œuvre par un dispositif de déquantification MQ⁻¹_D1 du dispositif de décodage de vues MDV_D1 de la figure 7A.

L'étape de décodage D2a) comprend également une sous-étape D23a) au cours de laquelle il est procédé à une transformation de l'ensemble VDq_{u,j} de coefficients déquantifiés qui est de type DCT⁻¹, DST⁻¹ ou DWT⁻¹. Cette transformation est l'opération inverse de la transformation effectuée à la sous-étape C13a) de la figure 1A. A l'issue de la sous-étape D23a), est obtenue au moins la vue résiduelle courante décodée, désignée par la référence VDr_{u,j}. Une telle opération est effectuée par un dispositif de Mr¹_D1 de transformation inverse de type DCT⁻¹ (abréviation anglaise de « Discrète Cosine Transform »), DST⁻¹ (abréviation anglaise de « Discrète Sine Transform »), DWT⁻¹ (abréviation anglaise de « Discrète Wavelet Transform »). Le dispositif de transformation MT⁻¹_D1 appartient au dispositif de décodage de vues MDV_D1 de la figure 7A.

Selon l'invention, au cours de l'étape de décodage D2a), il est procédé à une sous-étape D24a) de détermination, dans un ensemble de vues qui appartiennent à l'image multi-vues courante IMVⱼ ou bien à une autre image multi-vues de la séquence, d'au moins un parcours de vues nécessaires au décodage de ladite au moins une vue courante V_{u,j}. Ledit au moins un parcours comprend au moins une vue non encore décodée, désignée par la référence Vndᵢ. Une telle opération est effectuée par un dispositif de calcul CAL1_D1 appartenant au dispositif de décodage de vues MDV_D1 de la figure 7A.

Selon l'invention, au cours d'une sous-étape D25a) représentée à la figure 6A, il est procédé au décodage de la au moins une vue non encore décodée Vndᵢ située sur le parcours déterminé.

Comme cela a déjà été expliqué précédemment, en fonction des données de codage de la au moins une vue non encore décodée Vndᵢ qui peuvent, soit être inscrites dans le signal de données F1, si la au moins une vue Vndᵢ appartient à l'image multi-vues courante IMVⱼ, soit dans un autre signal de données représentatif d'une autre image multi-vues de la séquence, si la au moins une vue Vndᵢ appartient à cette autre image multi-vues, la au moins une vue non encore décodée Vndᵢ sera selon les cas :
- décodée en Intra,
- décodée en référence à au moins une vue précédemment décodée de ladite image multi-vues IMVⱼ,
- décodée en référence à au moins une vue précédemment décodée d'une autre image multi-vues de la séquence, ladite au moins une vue précédemment décodée représentant la scène selon la même position de visualisation angulaire que la au moins une vue non encore décodée Vndᵢ ou selon une position de visualisation angulaire différente.

De façon connue en tant que telle, il est procédé aux opérations suivantes :
- décodage entropique des données représentatives de la au moins une vue non encore décodée Vndᵢ, délivrant des informations numériques associées,
- déquantification de ces informations associées, délivrant des coefficients déquantifiés,
- transformation inverse des coefficients déquantifiés, délivrant au moins une vue résiduelle décodée VDrndᵢ,
- et dans le cas où le mode de prédiction Inter a été appliqué, ajout de la au moins une vue résiduelle décodée VDrndᵢ à la au moins une vue précédemment décodée de ladite image multi-vues IMVj ou d'une autre image multi-vues de la séquence.

A l'issue de ces opérations est obtenue au moins une vue décodée VDndi.

Selon l'invention, au cours d'une sous-étape D26a) représentée à la figure 6A, il est procédé à la construction (autrement appelée prédiction inverse) de la au moins une vue courante décodée VD_{u,j} en ajoutant à la au moins une vue résiduelle courante décodée VDr_{u,j} obtenue à l'issue de la sous-étape D23a), la au moins une vue décodée VDndᵢ qui a été obtenue à la sous-étape D25a) précitée.

Une telle sous-étape D26a) est mise en œuvre par un dispositif de calcul CAL2_D1 appartenant au dispositif de décodage de vues MDV_D1 de la figure 7A.

La au moins une vue courante décodée VD_{u,j} est alors délivrée par la sortie SOR_D1 du décodeur DO1, puis est stockée dans la mémoire tampon MT_D1 de façon à être utilisée pour le décodage d'une prochaine vue à décoder.

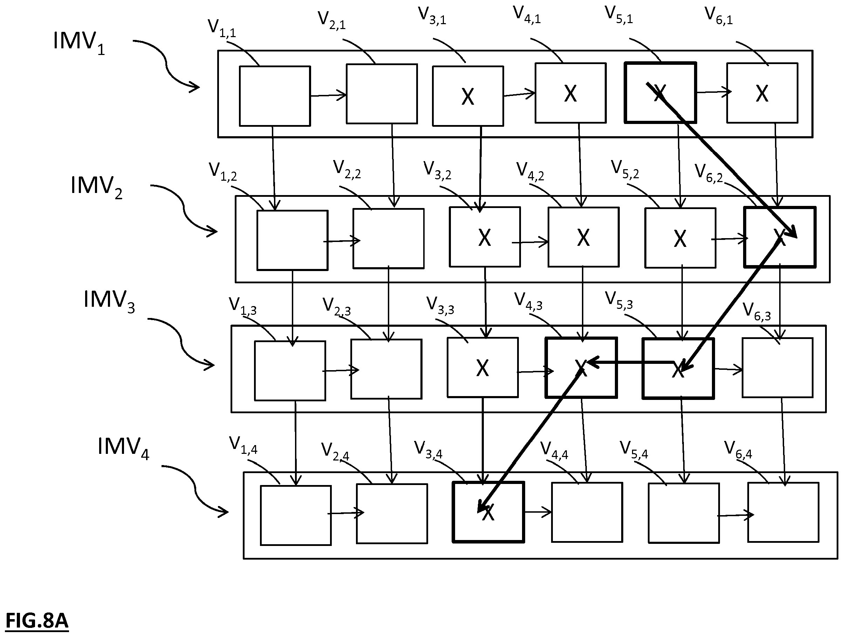

En référence maintenant à la figure 8A, est représenté un exemple de décodage d'au moins une vue courante V_{u,j} telle que codée en référence à la figure 5A.

Dans l'exemple représenté, chaque vue courante considérée est celle que choisit de requérir successivement un utilisateur lors de sa navigation d'une vue à l'autre dans la séquence d'images multi-vues IMV₁ à IMV₄. Par exemple, il s'agit des vues V_{5,1}, V_{6,2}, V_{5,3}, V_{4,3} puis V_{3,4}. Un tel parcours de navigation est représenté en gras sur la figure 8A.
a) Considérons maintenant la première vue courante V_{5,1} à décoder. Cette vue est décodée en Intra (représenté par des hachures sur la figure 8A), c'est-à-dire sans référence à d'autres vues. Le procédé selon l'invention ne s'applique donc pas pour la vue courante V_{5,1} considérée. Une fois décodée, la vue V_{5,1} est stockée dans la mémoire MT_D1 du décodeur de la figure 7A, en vue d'être utilisée pour le décodage de prochaines vues.
b) Considérons maintenant la deuxième vue courante V_{6,2} à décoder. Selon l'invention, il est déterminé un parcours de décodage de la vue courante V_{6,2} qui contient les vues de référence V_{6,1} et V_{5,2} qui n'ont pas encore été décodées et qui sont nécessaires au décodage de la vue courante V_{6,2}.

La vue V_{6,1} est décodée en référence à la vue V_{5,1} décodée précédemment.

La vue V_{5,2} est décodée en référence à la vue V_{5,1} décodée précédemment.

La vue courante V_{6,2} est alors décodée en référence aux vues décodées V_{6,1} et V_{5,2}. Une fois décodées, les vues V_{6,1}, V_{5,2} et V_{6,2} sont stockées dans la mémoire MT_D1 du décodeur de la figure 7A, en vue d'être utilisées pour le décodage de prochaines vues.
c) Considérons maintenant la troisième vue courante V_{5,3} à décoder. Cette vue est décodée en référence à la vue V_{5,2}. Or, la vue V_{5,2} a déjà été décodée précédemment. Le procédé de décodage selon l'invention ne s'applique donc pas pour la vue courante V_{5,3} considérée. Une fois décodée, la vue V_{5,3} est stockée dans la mémoire MT_D1 du décodeur de la figure 7A, en vue d'être utilisée pour le décodage de prochaines vues.
d) Considérons maintenant la quatrième vue courante V_{4,3} à décoder. Selon l'invention, il est déterminé un parcours de décodage de la vue courante V_{4,3} qui contient les vues de référence V_{4,2} et V_{3,3} qui n'ont pas encore été décodées et qui sont nécessaires au décodage de la vue courante V_{4,3}. Le parcours de décodage contient en outre la vue de référence V_{3,2} qui n'a pas non plus encore été décodée et qui est nécessaire au décodage des vues V_{3,3} et V_{4,2}, la vue de référence V_{4,1} qui n'a pas non plus encore été décodée et qui est nécessaire au décodage de la vue V_{4,2}, ainsi que la vue de référence V_{3,1} qui n'a pas non plus encore été décodée et qui est nécessaire au décodage des vues V_{4,1} et V_{3,2}. Une fois le parcours de décodage déterminé:
   - la vue V_{3,1} est décodée en Intra (représenté par des hachures sur la figure 8A), c'est-à-dire sans référence à d'autres vues. Une fois décodée, la vue V_{3,1} est stockée dans la mémoire MT_D1 du décodeur de la figure 7A, en vue d'être utilisée pour le décodage de prochaines vues ;
   - la vue V_{4,1} est décodée en référence à la vue V_{3,1} décodée précédemment puis est stockée dans la mémoire MT_D1 du décodeur de la figure 7A, en vue d'être utilisée pour le décodage de prochaines vues ;
   - la vue V_{3,2} est décodée en référence à la vue V_{3,1} décodée précédemment puis est stockée dans la mémoire MT_D1 du décodeur de la figure 7A, en vue d'être utilisée pour le décodage de prochaines vues ;
   - la vue V_{4,2} est décodée en référence aux vues V_{4,1} et V_{3,2} décodées précédemment puis est stockée dans la mémoire MT_D1 du décodeur de la figure 7A, en vue d'être utilisée pour le décodage de prochaines vues ;
   - la vue V_{3,3} est décodée en référence à la vue V_{3,2} décodée précédemment puis est stockée dans la mémoire MT_D1 du décodeur de la figure 7A, en vue d'être utilisée pour le décodage de prochaines vues.

La vue courante V_{4,3} est alors décodée en référence aux vues décodées V_{4,2} et V_{3,3}. Une fois décodée, la vue V_{4,3} est stockée dans la mémoire MT_D1 du décodeur de la figure 7A, en vue d'être utilisées pour le décodage de prochaines vues.
e) Considérons maintenant la cinquième vue courante V_{3,4} à décoder. Cette vue est décodée en référence à la vue V_{3,3} qui est elle-même décodée en référence à la vue V_{3,2} qui est elle-même décodée en référence à la vue V_{3,1}. Or, les vues V_{3,1} et V_{3,2} ont déjà été décodées précédemment. Le procédé de décodage selon l'invention ne s'applique donc pas pour la vue courante V_{3,4} considérée. Une fois décodée, la vue V_{3,4} est stockée dans la mémoire MT_D1 du décodeur de la figure 7A, en vue d'être utilisée pour le décodage de prochaines vues.

Ainsi, grâce à la détermination du parcours de décodage précitée, lorsque la vue V_{3,4} a été décodée, uniquement 12 vues de la séquence ont été décodées en comparaison des 24 vues nécessairement décodées par les décodeurs classiques. Il s'agit des vues V_{3,1}, V_{4,1}, V_{5,1}, V_{6,1}, V_{3,2}, V_{4,2}, V_{5,2}, V_{6,2}, V_{3,3}, V_{4,3}, V_{5,3}, V_{3,4} qui sont à cet effet signalées sur la figure 8A par une croix « X ».

### Description détaillée d'un deuxième mode de réalisation

Selon un deuxième mode de réalisation, la technique de décodage selon l'invention s'appuie sur un procédé de codage d'images multi-vues innovant, tel que mis en œuvre par modifications d'un codeur conforme à l'une quelconque des normes de codage vidéo actuelles ou à venir.

### Codage

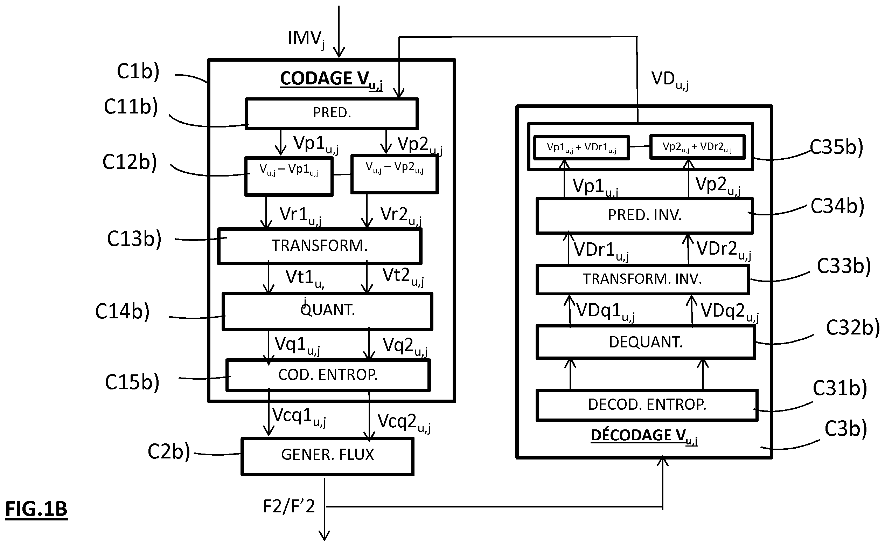

Le procédé de codage conforme au deuxième mode de réalisation est représenté sous la forme d'un algorithme comportant des étapes C1b) à C3b) telles que représentées à la figure 1B.

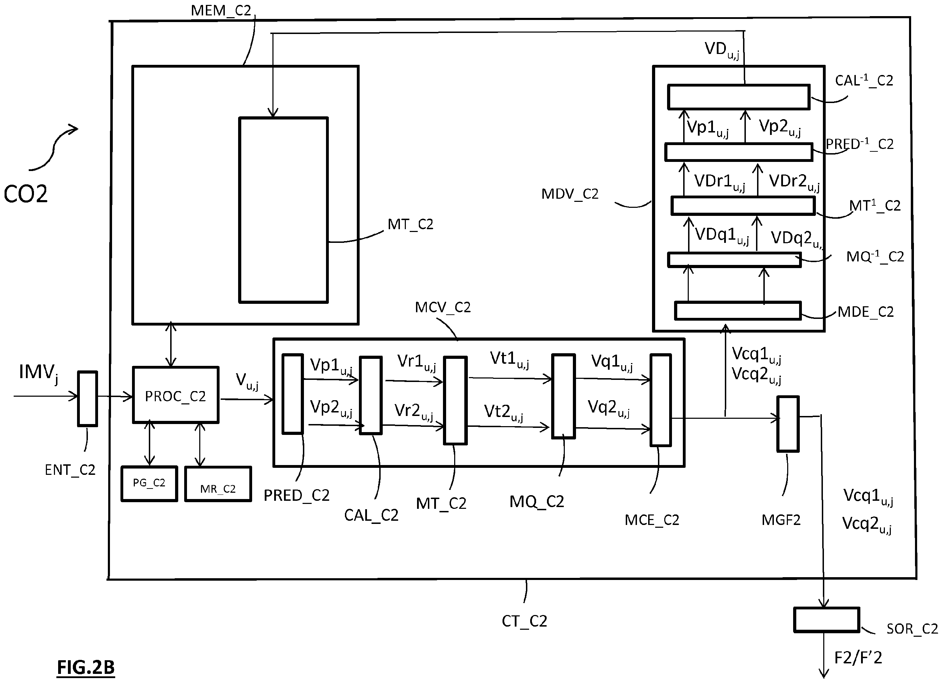

Selon le deuxième mode de réalisation de l'invention, le procédé de codage est implémenté dans un dispositif de codage ou codeur CO2 représenté à la figure 2B.

Comme illustré en figure 2B, un tel dispositif codeur comprend :
- une entrée ENT_C2 pour recevoir une image multi-vues courante à coder,
- un circuit de traitement CT_C2 pour mettre en œuvre le procédé de codage selon le deuxième mode de réalisation, le circuit de traitement CT_C2 contenant :
   - une mémoire MEM_C2 comprenant une mémoire tampon MT_C2,
   - un processeur PROC_C2 piloté par un programme d'ordinateur PG_C2,
- une sortie SOR_C2 pour délivrer un flux codé contenant les données obtenues à l'issue du codage de l'image multi-vues courante.

A l'initialisation, les instructions de code du programme d'ordinateur PG_C2 sont par exemple chargées dans une mémoire RAM, MR_C2, avant d'être exécutées par le circuit de traitement CT_C2.

Le procédé de codage représenté sur la figure 1B s'applique à toute image multi-vues courante IMVⱼ fixe telle que représentée à la figure 3A ou bien faisant partie d'une séquence d'images multi-vues IMV₁, ..., IMVⱼ,..., IMV_{K}(1≤j≤K) à coder, telle que représentée à la figure 3B.

Au cours d'une étape C1b) représentée à la figure 1B, pour une image multi-vues courante IMVⱼ, il est procédé au codage de ladite au moins une vue V_{u,j}.

Une telle étape C1b) est mise en œuvre par un dispositif de codage de vues MCV_C2 tel que représenté sur la figure 2B.

Un tel dispositif MCV_C2 de codage de vues comprend classiquement :
- un dispositif PRED_C2 de prédiction,
- un dispositif CAL_C2 de calcul de données résiduelles,
- un dispositif MT_C2 de transformation de type DCT, DST, DWT,
- un dispositif MQ_C2 de quantification,
- un dispositif MCE_C2 de codage entropique par exemple de type CABAC ou encore un codeur de Huffman connu en tant que tel.

Au cours de l'étape C1b), conformément à l'invention il est procédé à une sous-étape C11b) de prédiction de ladite au moins une vue courante V_{u,j} par rapport à une première vue et par rapport à au moins une deuxième vue, selon des techniques connues de prédiction intra et/ou inter. A cet effet, ladite au moins une vue courante Vᵤ,ⱼ est prédite conformément à un premier mode de prédiction et à au moins un deuxième mode de prédiction sélectionnés parmi une pluralité de modes de prédiction prédéterminés. Selon le contexte de codage, les premier et au moins deuxième modes de prédiction peuvent être identiques ou différents. Par exemple, dans le cas d'un codage de type MVC, et comme déjà expliqué précédemment, ladite au moins une vue courante V_{u,j} peut être prédite :
- indépendamment des autres vues de l'image multi-vues IMVⱼ ou de la séquence de K d'images multi-vues IMV₁, IMV₂,..., IMV_{j,},..., IMV_{K},
- par rapport à une autre vue de l'image multi-vues courante IMVⱼ,
- par rapport à une vue appartenant à une autre image multi-vues que ladite image multi-vues courante et représentant la scène selon la même position angulaire de visualisation que ladite au moins une vue courante,
- par rapport à une autre image multi-vues que ladite image multi-vues courante IMVⱼ et représentant la scène selon une position angulaire de visualisation différente de celle de ladite au moins une vue courante.

Les au moins deux vues prédictrices utilisées pour prédire ladite au moins une vue courante Vᵤ,ⱼ sont des vues qui ont été déjà codées puis décodées. Les au moins deux vues prédictrices sont préalablement stockées dans la mémoire tampon MT_C2 du codeur CO2 telle que représentée à la figure 2B.

Pour la au moins une vue courante Vᵤ,ⱼ à coder, au moins deux vues prédictrices optimales Vp1_{u,j} et Vp2_{u,j} sont obtenues suite à une mise en compétition desdits modes de prédiction prédéterminés, par exemple par minimisation d'un critère débit distorsion bien connu de l'homme du métier. Chacune des au moins deux vues prédictrices optimales Vp1_{u,j} et Vp2_{u,j} est considérée comme une même approximation de ladite au moins une vue courante V_{u,j} considérée.

Une telle sous-étape C11b) est mise en œuvre par le dispositif de prédiction PRED_C2 représenté sur la figure 2B.

L'étape de codage C1b) comprend également une sous-étape C12b) au cours de laquelle il est procédé au calcul de la différence entre ladite au moins une vue courante V_{u,j} et, selon l'invention, chacune des au moins deux vues prédictrices optimales Vp1_{u,j} et Vp2_{u,j} qui ont été sélectionnées à l'issue de la sous-étape C11b).

Au moins deux vues résiduelles Vr1_{u,j} et Vr2_{u,j} sont alors obtenues à l'issue de la sous-étape C12b).

Une telle sous-étape C12b) est mise en œuvre par le dispositif de calcul CAL_C2 représenté sur la figure 2B.

L'étape de codage C1b) comprend également une sous-étape C13b) au cours de laquelle il est procédé à la transformation des au moins deux vues résiduelles Vr1_{u,j} et Vr2_{u,j} selon une opération classique de transformation directe telle que par exemple une transformation de type DCT, DST ou DWT, pour produire selon l'invention au moins deux vues transformées, désignées respectivement par les références Vt1_{u,j} et Vt2_{u,j}. Une telle opération est effectuée par le dispositif MT_C2 représenté sur la figure 2B.

L'étape de codage C1b) comprend également une sous-étape C14b) au cours de laquelle il est procédé à la quantification des au moins deux vues transformées Vt1_{u,j} et Vt2_{u,j} selon une opération classique de quantification, telle que par exemple une quantification scalaire ou vectorielle. Selon l'invention, au moins deux ensembles Vq1_{u,j} et Vq2_{u,j} de coefficients quantifiés sont alors obtenus à l'issue de cette sous-étape. Une telle sous-étape C14b) est mise en œuvre au moyen du dispositif MQ_C2 de quantification tel que représenté à la figure 2B.

L'étape de codage C1b) comprend également une sous-étape C15b) au cours de laquelle il est procédé classiquement au codage des au moins deux ensembles Vq1_{u,j} et Vq2_{u,j} de coefficients, selon un ordre prédéterminé. Selon l'invention, au moins deux ensembles Vcq1_{u,j} et Vcq2_{u,j} de données codées sont alors obtenus à l'issue de la sous-étape C15b).

Dans le mode préféré de réalisation, le codage effectué est un codage entropique de type arithmétique ou de Huffman. La sous-étape C15b) consiste alors à :
- lire le ou les symboles d'un ensemble prédéterminé de symboles qui sont associés aux au moins deux ensembles Vq1_{u,j} et Vq2_{u,j} de coefficients quantifiés considérés pour ladite au moins une vue V_{u,j},
- associer des informations numériques, telles que des bits, au(x) symbole(s) lu(s).

Une telle sous-étape C15b) de codage entropique est mise en œuvre par le dispositif de codage entropique MCE_C2 représenté sur la figure 2B.

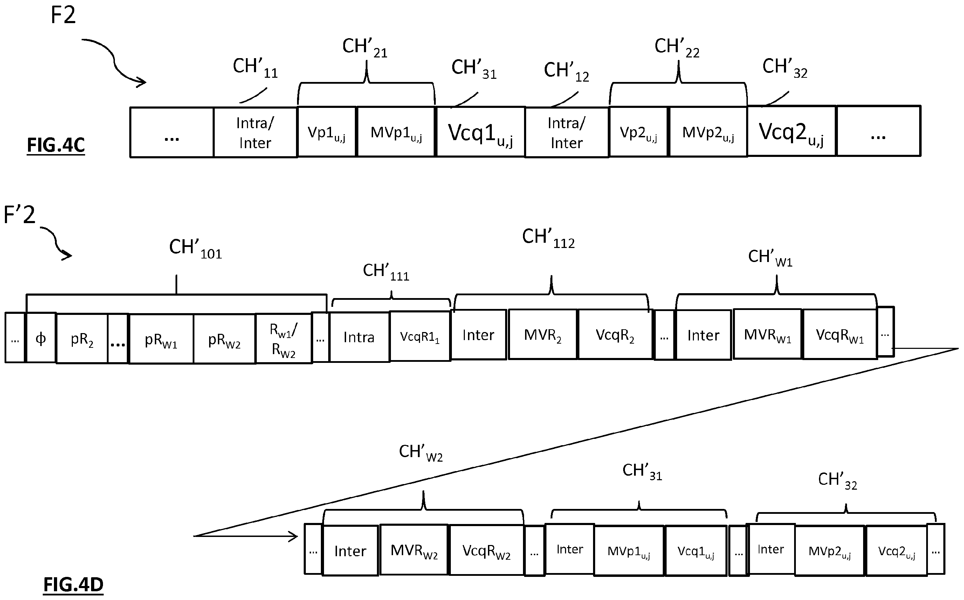

A l'issue de l'étape de codage C1b) de la vue V_{u,j}, il est procédé, au cours d'une étape C2b) représenté sur la figure 1B, à l'élaboration d'un signal de données F2 qui, comme représenté sur la figure 4C, comprend selon l'invention :
- un champ CH'₁₁ contenant le type de prédiction (inter ou intra) appliqué une première fois à la sous-étape C11b) de la figure 1 B, et le cas échéant, le mode de prédiction sélectionné,
- si le mode de prédiction Inter a été appliqué, un champ CH'₂₁ contenant l'indice de la première vue prédictrice Vp1_{u,j} sélectionnée à l'issue de la sous-étape C11b) et le vecteur de mouvement utilisé MVp1_{u,j},
- un champ CH'₃₁ contenant le premier ensemble des données codées entropiquement Vcq1_{u,j} associées à ladite au moins une vue courante V_{u,j},
- un champ CH'₁₂ contenant le type de prédiction (inter ou intra) appliqué au moins une deuxième fois à la sous-étape C11b) de la figure 1B, et le cas échéant, le mode de prédiction sélectionné,
- si le mode de prédiction Inter a été appliqué, un champ CH'₂₂ contenant l'indice de la au moins deuxième vue prédictrice Vp2_{u,j} sélectionnée à l'issue de la sous-étape C11b) et le vecteur de mouvement utilisé MVp2_{u,j},
- un champ CH'₃₂ contenant au moins le deuxième ensemble de données codées entropiquement Vcq2_{u,j} associées à ladite au moins une vue courante V_{u,j}.

Un tel signal est ensuite délivré via la sortie SOR_C2 du codeur CO2 de la figure 2B, puis transmis par un réseau de communication (non représenté), à un terminal distant. Celui-ci comporte un décodeur qui sera décrit plus en détail dans la suite de la description.

L'étape C2b) de production d'un tel signal est mise en œuvre par le dispositif MGF2 de génération de signal de données, tel que représenté sur la figure 2B.

Selon une variante de réalisation innovante propre à l'invention, pour chacune des vues de la séquence d'images considérée, ou pour chacune des vues d'un sous-ensemble de vues de la séquence d'images considérée, lesdites vues ayant été elles-mêmes codées selon un mode de prédiction intra ou inter, il est proposé de signaler dans un champ particulier du signal F'2 :
- soit une information représentative du fait que la vue considérée dans la séquence d'images a été codée en Intra,
- soit une information représentative de l'indice de la au moins une vue prédictrice qui a été utilisée pour prédire la vue considérée dans la séquence d'images.

Dans l'exemple représenté sur la figure 4D, où est représentée, pour des raisons de simplification, seulement une portion du signal F'2 dans laquelle est signalé uniquement un sous-ensemble de vues de la séquence d'images considérée, lequel contient ladite au moins une vue courante V_{u,j} qui a été codée, ainsi qu'un nombre W de vues VR₁,..., VR_{W} qui ont été codées avant ladite au moins une vue courante Vᵤ, ladite première vue VR₁ ayant été codée en mode intra et les autres vues VR₂ à VR_{W} ayant été codées chacune par exemple en mode inter par rapport à au moins une vue prédictrice correspondante VpR₂ à VpR_{W}. Il est supposé également que ladite au moins une vue courante V_{u,j} a été codée en inter par rapport à une première vue VR_{W1} de la séquence d'images considérée et à au moins une deuxième vue VR_{W2} de la séquence d'images considérée.

Selon la variante de réalisation représentée, la portion du signal F'2 comprend avantageusement un champ CH'₁₀₁ contenant une première information, désignée par exemple par le symbole φ, et représentative du fait que la première vue VR₁ du sous-ensembles de vues de la séquence d'images considérée a été codée en intra, l'indice pR₂ d'au moins la vue VpR₂ qui a servi à la prédiction de la vue VR₂, l'indice pR_{W1} d'au moins la vue VpR_{W1} qui a servi à la prédiction de la vue VR_{W1}, l'indice pR_{W2} d'au moins la vue VpR_{W2} qui a servi à la prédiction de la vue VR_{W2}, l'indice R_{W1} de ladite première vue prédictrice VR_{W1} qui peut servir à la prédiction de ladite au moins une vue courante V_{u,j}, l'indice R_{W2} de ladite au moins deuxième vue prédictrice VR_{W2} qui peut servir à la prédiction de ladite au moins une vue courante V_{u,j}. Les indices R_{W1} et R_{W2} sont regroupés ensemble dans le champ CH'₁₀₁ et séparés par le symbole « / » pour signaler que l'un d'entre eux seulement est sélectionné en fonction du choix de la vue prédictrice VR_{W1} ou VR_{W2} qui est mis en œuvre pour prédire ladite au moins une vue courante V_{u,j}.

Conformément à cette variante, il est alors procédé, au cours de l'étape C2b) représentée sur la figure 1B, à l'élaboration d'une portion du signal de données F'2 spécifiquement associée au codage de ladite au moins une vue courante V_{u,j}.

Une telle élaboration consiste à ajouter au signal F'2, de façon similaire à la figure 4C :
- un champ CH'₃₁ contenant le type de prédiction inter associé à ladite au moins une vue courante V_{u,j}, le vecteur de mouvement MVp1_{u,j} décrivant le mouvement entre la première vue prédictrice VR_{W1} et ladite au moins une vue courante V_{u,j}, l'ensemble des données codées entropiquement Vcq1_{u,j} associées à la dite au moins une vue courante V_{u,j},
- un champ CH'₃₂ contenant le type de prédiction inter associé à ladite au moins une vue courante V_{u,j}, le vecteur de mouvement MVp2_{u,j} décrivant le mouvement entre la au moins deuxième vue prédictrice VR_{W2} et ladite au moins une vue courante V_{u,j},l'ensemble des données codées entropiquement Vcq2_{u,j} associées à la dite au moins une vue courante V_{u,j}.

Les champs CH'₃₁ et CH'₃₂ viennent s'ajouter aux champs suivants déjà présents dans le signal F'2 :
- le champ CH'₁₁₁ ajouté précédemment lors du codage de la première vue VR₁ du sous-ensemble de vues de la séquence d'images considérée et contenant le type de prédiction associé à cette vue, ainsi que l'ensemble des données codées entropiquement VcqR₁ associé à cette vue,
- le champ CH'₁₁₂ ajouté précédemment lors du codage de la deuxième vue VR₂ du sous-ensemble de vues de la séquence d'images considérée et contenant le type de prédiction (inter) associé à cette vue, le vecteur de mouvement MVR₂ décrivant le mouvement entre la au moins une vue prédictrice VpR₂ et la vue VR₂, l'ensemble des données codées entropiquement VcqR₂ associé à la vue VR₂,
- ...,
- un champ CH'_{W1} ajouté précédemment lors du codage de la vue VR_{W1} du sous-ensemble de vues de la séquence d'images considérée et contenant le type de prédiction (inter) associé à la vue VR_{W1}, le vecteur de mouvement MVR_{W1} décrivant le mouvement entre la au moins une vue prédictrice VpR_{W1} et la vue VR_{W1}, l'ensemble des données codées entropiquement VcqR_{W1} associé à la vue VR_{W1},
- un champ CH'_{W2} ajouté précédemment lors du codage de la vue VR_{W2} du sous-ensemble de vues de la séquence d'images considérée et contenant le type de prédiction (inter) associé à la vue VR_{W2} de la séquence d'images considérée, le vecteur de mouvement MVR_{W2} décrivant le mouvement entre la au moins une vue prédictrice VpR_{W2} et la vue VR_{W2}, l'ensemble des données codées entropiquement VcqR_{W2} associé à la vue VR_{W2}.

Selon un mode de réalisation, une telle élaboration consiste en outre à ajouter au signal F'2, dans le champ CH'₁₀₁, en complément des indices pR₂, ..., pR_{W1}, pR_{W2} de vues prédictrices déjà présents dans le champ CH'₁₀₁, l'indice R_{W1} de la première vue prédictrice VR_{W1} qui a servi à la prédiction de ladite au moins une vue courante V_{u,j} et l'indice R_{W2} de la au moins deuxième vue prédictrice VR_{W2} qui a servi à la prédiction de ladite au moins une vue courante V_{u,j}.

Selon un autre mode de réalisation, l'ajout des indices R_{W1} et R_{W2} n'est pas nécessaire dans le cas où ces indices sont déjà présents dans le champ CH'₁₀₁. Selon cet autre mode de réalisation, le champ CH'₁₀₁ a été complété par tous les indices des vues prédictrices des vues du sous-ensemble de vues considéré, préalablement au codage de ces vues.

Grâce à la présence du champ CH'₁₀₁, les dépendances de codage associées à ladite au moins une vue courante V_{u,j} sont indiquées de façon regroupée dans le signal F'2 et seront ainsi rendues accessibles rapidement et directement lors du décodage de ladite au moins une vue courante V_{u,j}.

De façon connue en soi, au cours d'une étape C3b) représentée à la figure 1B, il est procédé au décodage de ladite au moins une vue courante V_{u,j}.

Une telle étape C3b) est mise en œuvre par un dispositif de décodage de vues MDV_C2 tel que représenté sur la figure 2B.

Un tel dispositif MDV_C2 de décodage de vues comprend classiquement :
- un dispositif MDE_C2 de décodage entropique, par exemple de type CABAC ou encore un décodeur de Huffman connu en tant que tel,
- un module MQ⁻¹_C2 de déquantification,
- un module MT⁻¹_C2 de transformation inverse de type DCT⁻¹, DST⁻¹, DWT⁻¹,
- un module PRED⁻¹_C2 de prédiction inverse,
- un module CAL⁻¹_C2 de calcul de reconstruction de vue.

Au cours de l'étape C3b), selon l'invention, il est procédé à une sous-étape C31b) de décodage entropique des au moins deux ensembles de données codées entropiquement Vcq1_{u,j} et Vcq2_{u,j} qui sont associés à ladite au moins une vue courante V_{u,j}. Dans le mode préféré de réalisation, le décodage effectué est un décodage entropique de type arithmétique ou de Huffman. La sous-étape C31b) consiste alors à :
- lire le ou les symboles d'un ensemble prédéterminé de symboles qui sont associés à chacun des ensembles de données codées entropiquement Vcq1_{u,j} et Vcq2_{u,j} de ladite au moins une vue courante V_{u,j},
- associer des informations numériques, telles que des bits, au(x) symbole(s) lu(s).

A l'issue de la sous-étape C31b) précitée, est obtenue une pluralité d'informations numériques associées selon l'invention à au moins deux ensembles de données quantifiées Vcq1_{u,j} et Vcq2_{u,j} qui ont été codées au cours de l'étape C15b) précitée.

Une telle sous-étape C31b) de décodage entropique est mise en œuvre par le dispositif de décodage entropique MDE_C2 représenté sur la figure 2B.

Au cours de la sous-étape C31b) précitée, est également décodé l'indice de la première vue prédictrice Vp1_{u,j} et de la au moins deuxième vue prédictrice Vp2_{u,j} qui ont été utilisées pour prédire ladite au moins une vue courante Vᵤ,ⱼ à la sous-étape C11b) de la figure 1B.

L'étape de codage C3b) comprend également une sous-étape C32b) au cours de laquelle il est procédé à la déquantification des informations numériques obtenues à la suite de la sous-étape C31b), selon une opération classique de déquantification qui est l'opération inverse de la quantification mise en œuvre à la sous-étape C14b). Au moins deux ensembles VDq1_{u,j} et VDq2_{u,j} de coefficients déquantifiés sont alors obtenus à l'issue de cette sous-étape. Une telle sous-étape C32b) est mise en œuvre par le dispositif MQ⁻¹_C2 de déquantification tel que représenté à la figure 2B.

L'étape de codage C3b) comprend également une sous-étape C33b) au cours de laquelle il est procédé à une transformation de chacun des au moins deux ensembles VDq1_{u,j} et VDq2_{u,j} de coefficients déquantifiés, laquelle est de type DCT⁻¹, DST⁻¹ ou DWT⁻¹. Cette transformation est l'opération inverse de la transformation effectuée à la sous-étape C13b). A l'issue de cette sous-étape, conformément à l'invention, sont obtenues au moins deux vues résiduelles décodées, telle que désignée respectivement par les références VDr1_{u,j} et VDr2_{u,j}. Une telle opération est effectuée par le dispositif MT⁻¹_C2 représenté sur la figure 2B.

L'étape de codage C3b) comprend également une sous-étape C34b) de prédiction de ladite au moins une vue courante V_{u,j} à décoder, par sélection, dans la mémoire tampon MT_C2 de la figure 2B, de l'une ou l'autre des au moins deux vues prédictrices optimales Vp1_{u,j} et Vp2_{u,j} qui ont été obtenues à la suite de la sous-étape C11b) précitée et qui sont respectivement associées aux deux indices décodés à l'issue de la sous-étape C31b).

Une telle sous-étape C34b) est mise en œuvre par le dispositif de prédiction PRED⁻¹_C2 représenté sur la figure 2B.

L'étape de codage C3b) comprend également une sous-étape de calcul C35b), au cours de laquelle il est procédé à la construction (appelée autrement prédiction inverse) de ladite au moins une vue décodée VD_{u,j} en ajoutant à l'une ou l'autre des au moins deux vues résiduelles décodées VDr1_{u,j} et VDr2_{u,j} obtenues à l'issue de la sous-étape C33b), respectivement l'une ou l'autre des au moins deux vues prédictrices Vp1_{u,j} et Vp2_{u,j} qui ont été identifiées à la sous-étape C31b) précitée.

Une telle sous-étape C35b) est mise en œuvre par le dispositif de calcul CAL⁻¹_C2 représenté sur la figure 2B.

Les étapes de codage C1b) à C3b) qui viennent d'être décrites ci-dessus sont ensuite mises en œuvre pour chacune des vues V_{u,1}, V_{u,2}, ..., V_{u,N} à coder de l'image multi-vues courante IMVⱼ considérée.

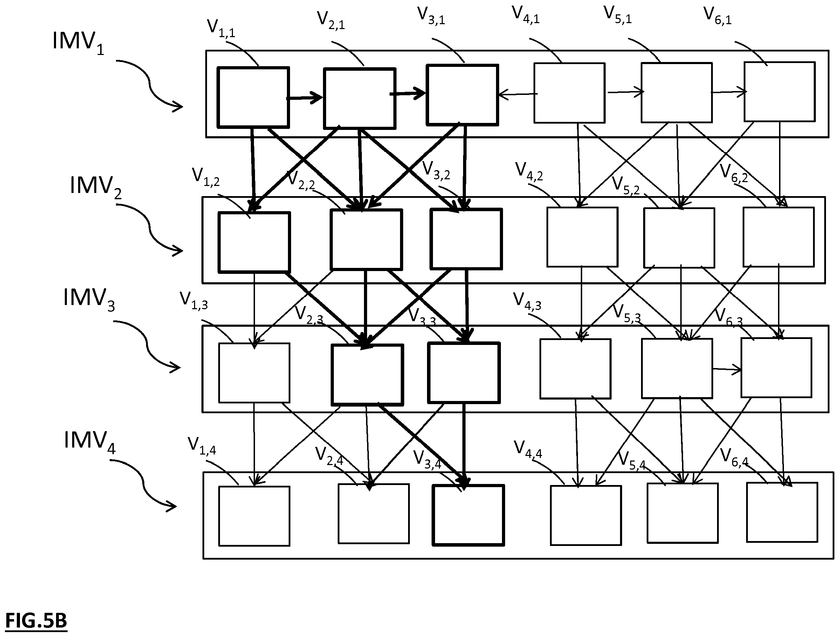

En référence maintenant à la figure 5B, est représenté un exemple de codage d'au moins une vue courante V_{u,j} conformément au procédé de codage de la figure 1B. Dans l'exemple représenté, l'image multi-vues courante IMVⱼ est la quatrième image IMV₄ d'une séquence d'images multi-vues, chaque image multi-vues comprenant par exemple six vues. La au moins une vue courante codée qui est considérée dans cet exemple est par exemple la troisième vue V_{3,4} de l'image multi-vues courante IMV₄. La vue V_{3,4} est représentée en gras sur la figure 5B.

Dans l'exemple représenté, la vue courante V_{3,4} est codée en mode Inter à partir de la vue V_{2,3} ou de la vue V_{3,3} de l'image multi-vues IMV₃.
a) Lorsque la vue courante V_{3,4} est codée à partir de la vue V_{2,3}, la vue V₂,₃ est elle-même codée à partir de la vue V_{1,2}, V_{2,2} ou V_{3,2}. Si la vue V_{1,2} est utilisée pour coder la vue V_{2,3}, la vue V_{1,2} est elle-même codée à partir de la vue V_{1,1} codée en Intra, ce mode étant représenté par des hachures sur la figure 5B, ou bien de la vue V_{2,1}. Si la vue V_{1,2} est codée à partir de la vue V_{2,1}, cette dernière est elle-même codée par rapport à la vue V_{1,1}. Si la vue V_{2,2} est utilisée pour coder la vue V_{2,3}, la vue V_{2,2} est elle-même codée à partir de la vue V_{1,1} ou de la vue V_{2,1} ou de la vue V_{3,1}. Si c'est la vue V_{2,1} qui est choisie, cette dernière est elle-même codée par rapport à la vue V_{1,1}. Si c'est la vue V_{3,1} qui est choisie, cette dernière est elle-même codée à partir de la vue V_{2,1} qui est elle-même codée par rapport à la vue V_{1,1}. Si la vue V_{3,2} est utilisée pour coder la vue V_{2,3}, la vue V_{3,2} est elle-même codée à partir de la vue V_{2,1} ou de la vue V_{3,1} Si c'est la vue V_{2,1} qui est choisie, cette dernière est elle-même codée par rapport à la vue V_{1,1}. Si c'est la vue V_{3,1} qui est choisie, cette dernière est elle-même codée à partir de la vue V_{2,1} qui est elle-même codée par rapport à la vue V_{1,1}.
b) Lorsque la vue courante V_{3,4} est codée à partir de la vue V_{3,3}, la vue V_{3,3} est elle-même codée à partir de la vue V_{2,2} ou V_{3,2}. Si la vue V_{2,2} est utilisée pour coder la vue V_{3,3}, la vue V_{2,2} est elle-même codée à partir de la vue V_{1,1} ou de la vue V_{2,1} ou de la vue V_{3,1}. Si c'est la vue V_{2,1} qui est choisie, cette dernière est elle-même codée par rapport à la vue V_{1,1}. Si c'est la vue V_{3,1} qui est choisie, cette dernière est elle-même codée à partir de la vue V_{2,1} qui est elle-même codée par rapport à la vue V_{1,1}. Si la vue V_{3,2} est utilisée pour coder la vue V_{3,3}, la vue V_{3,2} est elle-même codée à partir de la vue V_{2,1} ou de la vue V_{3,1}. Si c'est la vue V_{2,1} qui est choisie, cette dernière est elle-même codée par rapport à la vue V_{1,1}. Si c'est la vue V_{3,1} qui est choisie, cette dernière est elle-même codée à partir de la vue V_{2,1} qui est elle-même codée par rapport à la vue V_{1,1}.

Les dépendances de codage d'une vue à l'autre sont quant à elles représentées par des flèches sur la figure 5B.

Selon le deuxième mode de réalisation de codage selon l'invention, il est donc proposé pour coder la vue courante V_{3,4} une pluralité d'arborescences de codage alternative, l'ensemble de ces arborescences étant représentées sans distinction, en gras sur la figure 5B.

### Décodage

Un deuxième mode de réalisation de l'invention va maintenant être décrit, dans lequel le procédé de décodage est utilisé pour décoder au moins une vue courante appartenant à une image multi-vues qui a été précédemment codée conformément au procédé de codage de la figure 1B et dont les données codées sont contenues dans le signal de données F2 ou F'2. Ladite au moins une vue courante est apte à être décodée par un décodeur conforme à l'une quelconque des normes de décodage vidéo actuelles ou à venir.

Le procédé de décodage selon le deuxième mode de réalisation de l'invention est par exemple implémenté de manière logicielle ou matérielle par modifications d'un tel décodeur.

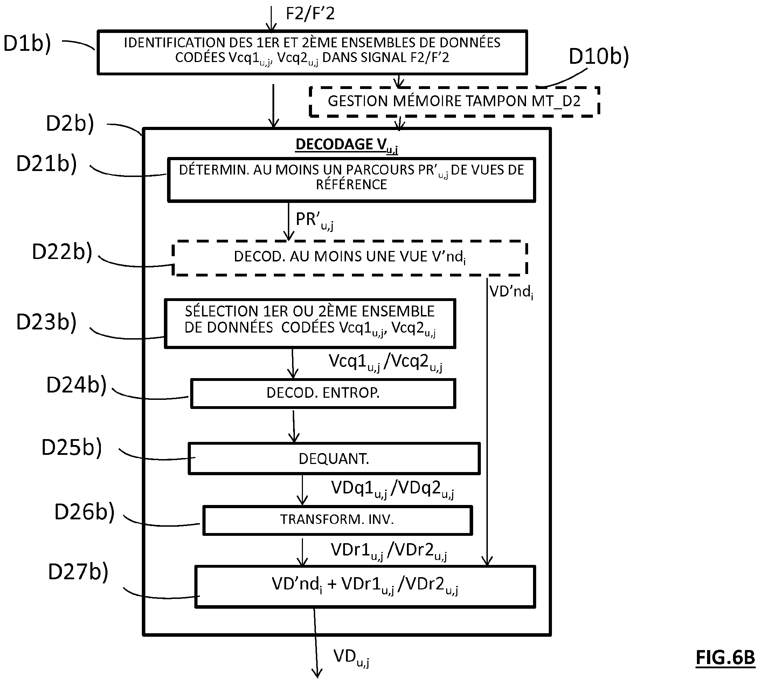

Le procédé de décodage selon l'invention est représenté sous la forme d'un algorithme comportant des étapes D1b) à D2b) telles que représentées à la figure 6B.

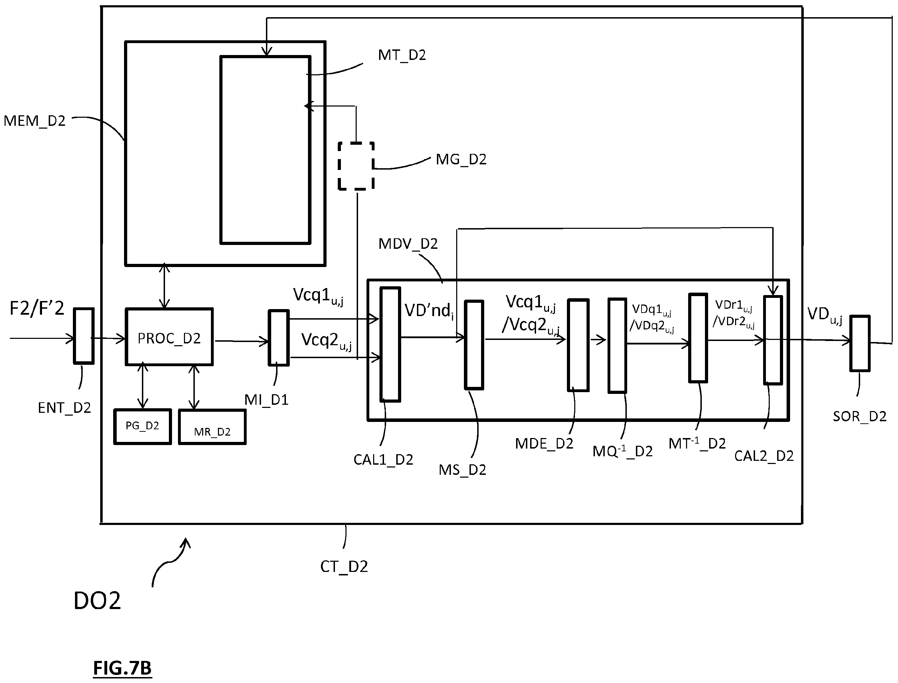

Selon ce premier mode de réalisation, le procédé de décodage selon l'invention est implémenté dans un dispositif de décodage ou décodeur DO2 représenté à la figure 7B.

Comme illustré en figure 7B, un tel dispositif décodeur comprend :
- une entrée ENT_D2 pour recevoir le signal de données F2 ou F'2 représentatif de l'image multi-vues courante qui a été précédemment codée,
- un circuit de traitement CT_D2 pour mettre en œuvre le procédé de décodage selon l'invention, le circuit de traitement CT_D2 contenant :
   - une mémoire MEM_D2 comprenant une mémoire tampon MT_D2,
   - un processeur PROC_D2 piloté par un programme d'ordinateur PG_D2,
- une sortie SOR_D2 pour délivrer au moins une vue courante reconstruite contenant les données obtenues à l'issue du décodage selon le deuxième mode de réalisation.

A l'initialisation, les instructions de code du programme d'ordinateur PG_D2 sont par exemple chargées dans une mémoire RAM, MR_D2, avant d'être exécutées par le circuit de traitement CT_D2.

Le procédé de décodage représenté sur la figure 6B s'applique à toute vue courante V_{u,j} d'une image multi-vues courante IMVⱼ fixe ou bien faisant partie d'une séquence d'images multi-vues IMV₁, ..., IMVⱼ,..., IMV_{K}(1≤j≤K).

A cet effet, des informations représentatives de ladite au moins une vue courante Vᵤ,ⱼ à décoder sont identifiées :
- soit dans la portion correspondante, représentée à la figure 4C, du signal de données F2 reçu au décodeur et tel que délivré à la suite du procédé de codage de la figure 1B,
- soit dans la portion correspondante, représentée à la figure 4D, du signal de données F'2 reçu au décodeur et tel que délivré à la suite du procédé de codage de la figure 1B.

Au cours d'une étape D1 b) représentée à la figure 6B, il est procédé, de façon connue en soi, à l'identification, dans la portion correspondante du signal de données F2 :
- des au moins premier et deuxième ensembles de données Vcq1_{u,j} et Vcq2_{u,j} associés à ladite au moins une vue courante V_{u,j}, tels que codés entropiquement à la suite de la sous-étape de codage C15b) de la figure 1B et contenus respectivement dans les champs CH'₃₁ et CH'₃₂ du signal de données F2 représenté sur la figure 4C,
- de l'information d'identification des au moins deux vues prédictrices Vp1_{u,j} et Vp2_{u,j} obtenues à la suite de la sous-étape de prédiction C11b) du procédé de codage représenté à la figure 1B et contenues respectivement dans les champs CH'₂₁ et CH'₂₂ du signal de données F2 représenté sur la figure 4C, une telle information consistant par exemple dans l'indice de chacune des au moins deux vues prédictrices Vp1_{u,j} et Vp2_{u,j}.

Selon une variante innovante de l'étape D1b) représentée à la figure 6B, il est procédé à l'identification, dans la portion correspondante du signal de données F'2 de la figure 4D :
- à partir respectivement des champs CH'₃₁ et CH'₃₂, des au moins premier et deuxième ensembles des données Vcq1_{u,j} et Vcq2_{u,j} associés à ladite au moins une vue courante V_{u,j}, tels que codés entropiquement à la suite de la sous-étape de codage C15b) de la figure 1B,
- à partir du champ CH'₁₀₁, de l'indice R_{W1} de la première vue VR_{W1} qui a servi à la prédiction de ladite au moins une vue courante V_{u,j}, de l'indice R_{W2} de la au moins deuxième vue VR_{W2} qui a servi à la prédiction de ladite au moins une vue courante Vᵤ,ⱼ et éventuellement, si de telles informations ne sont pas encore connues au moment du décodage de ladite au moins une vue courante V_{u,j}, l'information selon laquelle la première vue VR₁ a été prédite en Intra, l'indice pR₂ d'au moins la vue VpR₂ qui a servi à la prédiction de la vue VR₂, ..., l'indice pR_{W1} d'au moins la vue VpR_{W1} qui a servi à la prédiction de la vue VR_{W1}, l'indice pR_{W2} d'au moins la vue VpR_{W2} qui a servi à la prédiction de la vue VR_{W2}.

L'étape d'identification D1b) est mise en œuvre par un dispositif MI_D2 d'analyse de signal, tel que représenté à la figure 7B.

Selon l'invention, à la suite de l'étape D1b), il est procédé, au cours d'une étape D2b) représentée à la figure 6B, au décodage de ladite au moins une vue V_{u,j} codée entropiquement.

Une telle étape D2b) est mise en œuvre par un dispositif de décodage de vues MDV_D2 tel que représenté sur la figure 7B.

Selon l'invention, au cours de l'étape de décodage D2b), il est procédé à une sous-étape D21b) de détermination, dans un ensemble de vues qui appartiennent à l'image multi-vues courante IMVⱼ ou bien à une autre image multi-vues de la séquence, d'au moins un parcours PR'_{u,j} de vues de référence nécessaires au décodage de ladite au moins une vue courante V_{u,j} qui, compte tenu des arborescences de codage alternatives mises en œuvre au codage, contient l'une des première ou au moins deuxième vues prédictrices Vp1_{u,j} et Vp2_{u,j}. Selon une première alternative, ledit au moins un parcours PR'_{u,j} ne contient qu'une ou plusieurs vues de référence déjà décodées. Selon une deuxième alternative, ledit au moins un parcours PR'_{u,j} comprend au moins une vue non encore décodée, désignée par la référence V'ndᵢ. Une telle opération de détermination de parcours est effectuée par un dispositif de calcul CAL1_D2 appartenant au dispositif de décodage de vues MDV_D2 de la figure 7B.

Si la deuxième alternative a été mise en œuvre, au cours d'une sous-étape D22b) représentée à la figure 6B, il est procédé au décodage de la au moins une vue non encore décodée V'ndᵢ située sur le parcours déterminé. Compte tenu du fait que cette deuxième alternative n'est pas systématiquement mise en œuvre, elle est représentée en pointillé sur la figure 6B.

Comme cela a déjà été expliqué précédemment, en fonction des données de codage de la au moins une vue non encore décodée V'ndᵢ qui peuvent, soit être inscrites dans le signal de données F2 ou F'2 si la au moins une vue V'ndᵢ appartient à l'image multi-vues courante IMVⱼ, soit dans un autre signal de données représentatif d'une autre image multi-vues de la séquence si la au moins une vue V'ndᵢ appartient à cette autre image multi-vues, ladite au moins une vue non encore décodée V'ndᵢ sera selon les cas :
- décodée en Intra,
- décodée en référence à au moins une vue précédemment décodée de ladite image multi-vues IMVⱼ,
- décodée en référence à au moins une vue précédemment décodée d'une autre image multi-vues de la séquence, ladite au moins une vue précédemment décodée représentant la scène selon la même position de visualisation angulaire que ladite au moins une vue non encore décodée V'ndᵢ ou selon une position de visualisation angulaire différente.

De façon connue en tant que telle, il est procédé aux opérations suivantes :
- décodage entropique des données représentatives de ladite au moins une vue non encore décodée V'ndᵢ, délivrant des informations numériques associées,
- déquantification de ces informations associées, délivrant des coefficients déquantifiés,
- transformation inverse des coefficients déquantifiés, délivrant au moins une vue résiduelle décodée VD'rndᵢ,
- et dans le cas où le mode de prédiction Inter a été appliqué, ajout de la au moins une vue résiduelle décodée VD'rndᵢ à la au moins une vue précédemment décodée de ladite image multi-vues IMVj ou d'une autre image multi-vues de la séquence.

A l'issue de ces opérations est obtenue au moins une vue décodée VD'ndᵢ.

Au cours de l'étape de décodage D2b), conformément à l'invention, en fonction de la géométrie du au moins un parcours de décodage PR'_{u,j} déterminé à la sous-étape précédente, il est procédé à une sous-étape D23b) de sélection de l'un des ensembles de données codées entropiquement Vcq1_{u,j} ou Vcq2_{u,j} associés à ladite au moins une vue Vᵤ,ⱼ à décoder.

Une telle sous-étape D23b) est mise en œuvre par un dispositif de sélection MS_D2 du dispositif de décodage de vues MDV_D2 de la figure 7B.

Au cours de l'étape de décodage D2b), il est procédé à une sous-étape D24b) de décodage entropique de l'un des au moins deux ensembles de données codées entropiquement Vcq1_{u,j} ou Vcq2_{u,j} associés à ladite au moins vue V_{u,j} à décoder. Dans le mode préféré de réalisation, le décodage effectué est un décodage entropique de type arithmétique ou de Huffman. La sous-étape D24b) consiste alors à :
- lire le ou les symboles d'un ensemble prédéterminé de symboles qui sont associés à l'ensemble de données codées entropiquement Vcq1_{u,j} ou Vcq2_{u,j} qui a été sélectionné,
- associer des informations numériques, telles que des bits, au(x) symbole(s) lu(s).

A l'issue de la sous-étape D24b) précitée, est obtenue une pluralité d'informations numériques associées à l'ensemble de données codées entropiquement Vcq1_{u,j} ou Vcq2_{u,j} qui a été sélectionné.

Au cours de l'étape D24b), si c'est le signal F2 de la figure 4C qui a été reçu au décodeur, est également lu dans le champ CH'₂₁ ou CH'₂₂ de la portion du signal de données F2 :
- le vecteur de mouvement MVp1_{u,j} ou MVp2_{u,j} qui a été utilisé en association respectivement avec la vue prédictrice Vp1_{u,j} ou Vp2_{u,j},
- le type de prédiction inter ou intra associé à la première ou à la deuxième vue prédictrice.

Si c'est le signal F'2 de la figure 4D qui a été reçu au décodeur, est également lu :
- dans le cas où c'est l'ensemble de données codées entropiquement Vcq1_{u,j} qui est sélectionné, à partir du champ CH'_{w1} de la portion du signal de données F'2:
   - le type de prédiction inter associé à la vue VR_{W1} de la séquence d'images considérée,
   - le vecteur de mouvement utilisé MVR_{w1},
- dans le cas où c'est l'ensemble de données codées entropiquement Vcq2_{u,j} qui est sélectionné, à partir du champ CH'_{w2} de la portion du signal de données F'2:
   - le type de prédiction inter associé à la vue VR_{w2} de la séquence d'images considérée,
   - le vecteur de mouvement utilisé MVR_{w2}.

Une telle sous-étape D24b) de décodage entropique est mise en œuvre par un dispositif de décodage entropique MDE_D2 du dispositif de décodage de vues MDV_D2 de la figure 7B.

Au cours de la sous-étape D24b) précitée, est également décodé l'indice de la vue prédictrice Vp1_{u,j} ou Vp2_{u,j} qui a été utilisée pour prédire ladite au moins une vue courante V_{u,j} lors de la sous-étape C11b) de la figure 1B et qui est associée à l'ensemble de données codées entropiquement Vcq1_{u,j} ou Vcq2_{u,j} qui a été sélectionné. La vue prédictrice Vp1_{u,j} ou Vp2_{u,j} est une vue qui a été déjà décodée ou non. Dans le cas où la vue prédictrice Vp1_{u,j} ou Vp2_{u,j} a été décodée, elle est préalablement stockée dans la mémoire tampon MT_D2 du décodeur DO2 de la figure 7B. Sinon, elle est décodée à partir d'une ou de plusieurs vues déjà décodées sur le parcours déterminé PR'_{u,j}.

L'étape de décodage D2b) comprend également une sous-étape D25b) au cours de laquelle il est procédé à la déquantification des informations numériques obtenues à la suite de la sous-étape D24b), selon une opération classique de déquantification qui est l'opération inverse de la quantification mise en œuvre lors la sous-étape de quantification C14b) de la figure 1B. Un ensemble VDq1_{u,j} ou VDq2_{u,j} de coefficients déquantifiés est alors obtenu à l'issue de la sous-étape D25b). Une telle sous-étape D25b) est mise en œuvre par un dispositif de déquantification MQ⁻¹_D2 du dispositif de décodage de vues MDV_D2 de la figure 7B.

L'étape de décodage D2b) comprend également une sous-étape D26b) au cours de laquelle il est procédé à une transformation de l'ensemble VDq1_{u,j} ou VDq2_{u,j} de coefficients déquantifiés, qui est de type DCT⁻¹, DST⁻¹ ou DWT⁻¹. Cette transformation est l'opération inverse de la transformation effectuée à la sous-étape C13b) de la figure 1B. A l'issue de la sous-étape D26b), est obtenue la au moins une vue résiduelle courante décodée, désignée par la référence VDr1_{u,j} ou VDr2_{u,j}. Une telle opération est effectuée par un dispositif de MT⁻¹_D2 de transformation inverse de type DCT⁻¹, DST⁻¹, DWT⁻¹. Le dispositif de transformation MT⁻¹_D2 appartient au dispositif de décodage de vues MDV_D2 de la figure 7B.

Selon l'invention, au cours d'une sous-étape D27b) représentée à la figure 6B, il est procédé à la construction (appelée autrement prédiction inverse) de ladite au moins une vue décodée VD_{u,j} en ajoutant à la au moins une vue résiduelle courante décodée VDr1_{u,j} ou VDr2_{u,j} obtenue à l'issue de la sous-étape D26b), ladite au moins une vue décodée VD'ndᵢ qui a été obtenue à la sous-étape D22b) précitée.

Une telle sous-étape D27b) est mise en œuvre par un dispositif de calcul CAL2_D2 appartenant au dispositif de décodage de vues MDV_D2 de la figure 7B.

Ladite au moins une vue décodée VD_{u,j} est alors délivrée par la sortie SOR_D2 du décodeur DO2, puis est stockée dans la mémoire tampon MT_D2 de façon à être utilisée pour le décodage d'une prochaine vue à décoder.

Selon le contexte de décodage, le procédé de décodage selon le deuxième mode de réalisation peut être mis en œuvre indépendamment du procédé de décodage selon le premier mode de réalisation de la figure 6A ou bien être mis en œuvre en combinaison avec ce dernier.

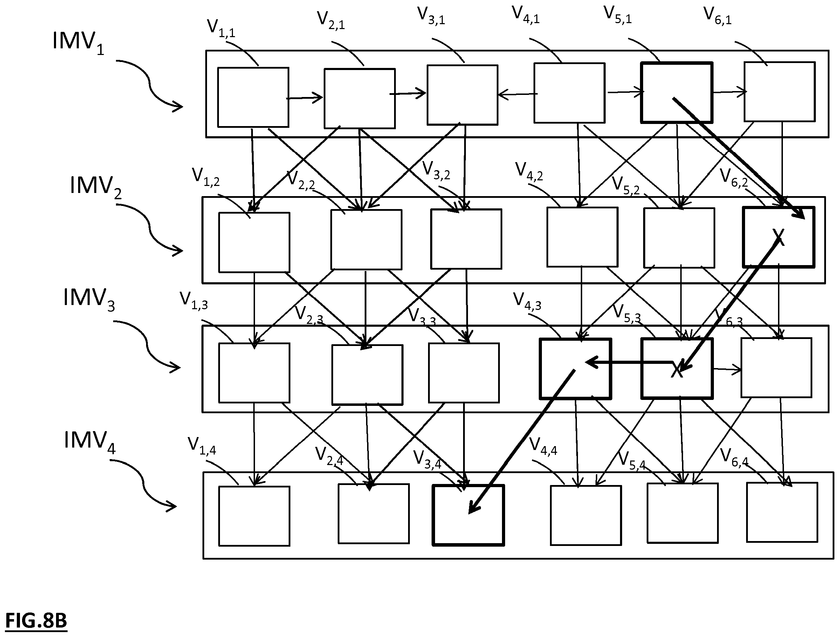

En référence maintenant à la figure 8B, est représenté un exemple de décodage d'au moins une vue courante Vᵤ,ⱼ telle que codée en référence à la figure 5B. Dans l'exemple représenté, chaque image multi-vues comprend par exemple six vues. En outre, selon la vue courante considérée :
- un seul résidu de prédiction est nécessairement utilisé pour reconstruire la vue courante V_{u,j},
- deux résidus de prédiction différents peuvent être alternativement utilisés pour reconstruire une vue courante V_{u,j},
- trois résidus de prédiction différents peuvent être alternativement utilisés pour reconstruire une vue courante Vᵤ,ⱼ .

Dans l'exemple représenté, chaque vue courante considérée est celle que choisit de requérir successivement un utilisateur lors de sa navigation d'une vue à l'autre dans la séquence d'images multi-vues IMV₁ à IMV₄. Par exemple, il s'agit des vues V_{5,i}, V_{6,2}, V_{5,3}, V_{4,3} puis V_{3,4}. Un tel parcours de navigation est représenté en gras sur la figure 8B.

Supposons que la au moins une vue courante à décoder qui est considérée dans cet exemple est par exemple la première vue V_{5,1} que l'utilisateur souhaite visualiser.

Dans l'exemple représenté, la vue V_{5,1} ne peut être décodée qu'à partir de la vue V_{4,1} qui n'est pas encore décodée. La vue V_{4,1} est donc tout d'abord décodée en intra (représenté par des hachures sur la figure 8B), puis stockée dans la mémoire tampon MT_D2 de la figure 7B en vue d'être utilisée pour le décodage de prochaines vues. La vue V_{5,1} est alors décodée à son tour en référence à la vue V_{4,1} décodée précédemment, puis stockée dans la mémoire tampon MT_D2 de la figure 7B en vue d'être utilisée pour le décodage de prochaines vues.

Ainsi, grâce à l'invention, uniquement 2 vues de la séquence ont besoin d'être décodées en comparaison des 6 vues de l'image multi-vues IMV₁ qui sont nécessairement décodées par les décodeurs classiques.

Supposons maintenant que la au moins une vue courante à décoder qui est considérée dans cet exemple est par exemple la deuxième vue V_{6,2} que l'utilisateur souhaite visualiser.

Dans l'exemple représenté, la vue V_{6,2} peut être décodée à partir de la vue V_{5,1} ou de la vue V_{6,1}. Puisque l'utilisateur a visualisé précédemment la vue V_{5,1} qui a donc été décodée à cet effet et qui est donc disponible dans la mémoire tampon MT_D2 de la figure 7B, c'est la vue V_{5,1} qui est choisie préférentiellement pour décoder la vue V_{6,2}.

Ainsi, grâce à l'invention, uniquement 3 vues de la séquence ont besoin d'être décodées en comparaison des 12 vues (6 vues de l'image multi-vues IMV₁ et 6 vues de l'image multi-vues IMV₂) qui sont nécessairement décodées par les décodeurs classiques.

Supposons maintenant que la au moins une vue courante à décoder qui est considérée dans cet exemple est par exemple la troisième vue V_{5,3} que l'utilisateur souhaite visualiser.

Dans l'exemple représenté, la vue V_{5,3} peut être décodée à partir de la vue V_{4,2}, de la vue V_{5,2} ou de la vue V_{6,2}. Puisque l'utilisateur a visualisé précédemment la vue V_{6,2} qui a donc été décodée à cet effet et qui est donc disponible dans la mémoire tampon MT_D2 de la figure 7B, c'est la vue V_{6,2} qui est choisie préférentiellement pour décoder la vue V_{5,3}.

Ainsi, grâce à l'invention, uniquement 4 vues de la séquence ont besoin d'être décodées en comparaison des 18 vues (6 vues de l'image multi-vues IMV₁, 6 vues de l'image multi-vues IMV₂ et 6 vues de l'image multi-vues IMV₃) qui sont nécessairement décodées par les décodeurs classiques.

Supposons maintenant que la au moins une vue courante à décoder qui est considérée dans cet exemple est par exemple la quatrième vue V_{4,3} que l'utilisateur souhaite visualiser.

Dans l'exemple représenté, la vue V_{4,3} peut être décodée à partir de la vue V_{4,2} ou de la vue V_{5,2}. Puisque la vue V_{4,1} a été précédemment décodée et est donc disponible dans la mémoire tampon MT_D2 de la figure 7B, il est choisi de décoder la vue V_{4,2} par rapport à la vue V_{4,1} puis de décoder la vue V_{4,3} par rapport à la vue V_{4,2}.

Ainsi, grâce à l'invention, uniquement 3 vues de la séquence ont besoin d'être décodées en comparaison des 18 vues (6 vues de l'image multi-vues IMV₁ 6 vues de l'image multi-vues IMV₂ et 6 vues de l'image multi-vues IMV₃) qui sont nécessairement décodées par les décodeurs classiques.

Supposons que la au moins une vue courante à décoder qui est considérée dans cet exemple est par exemple la cinquième vue V_{3,4} que l'utilisateur souhaite visualiser.

Dans l'exemple représenté, la vue V_{3,4} peut être décodée à partir de la vue V_{2,3} ou de la vue V_{3,3}, les vues V_{2,3} et V_{3,3} n'ayant pas encore été décodées. Il est choisi par exemple de décoder la vue V_{2,3}. Dans l'exemple représenté, la vue V_{2,3} peut être décodée à partir de la vue V_{1,2}, V_{2,2} ou V_{3,2}, les vues V_{1,2}, V_{2,2} et V_{3,2} n'ayant pas encore été décodées. Il est choisi par exemple de décoder la vue V_{1,2}. Dans l'exemple représenté, la vue V_{1,2} peut être décodée à partir de la vue V_{1,1} ou V_{2,1}, les vues V_{1,1}, V_{2,1} n'ayant pas encore été décodées. Il est choisi par exemple de décoder la vue V_{1,1}. Dans cet exemple, le parcours de décodage de la vue courante V_{3,4} déterminé parmi plusieurs parcours possibles comprend donc, dans l'ordre de décodage à mettre en œuvre, les vues non encore décodées V_{1,1}, V_{1,2} et V_{2,3}.

Une fois qu'un tel parcours de décodage a été déterminé, la vue V_{1,1} est décodée en Intra (représenté par des hachures sur la figure 8B). Une fois décodée, la vue V_{1,1} est stockée dans la mémoire MT_D2 du décodeur de la figure 7B, en vue d'être utilisée pour le décodage de prochaines vues. La vue V_{1,2} est ensuite décodée en référence à la vue V_{1,1} décodée précédemment, puis est stockée dans la mémoire MT_D2 du décodeur de la figure 7B, en vue d'être utilisée pour le décodage de prochaines vues. La vue V_{2,3} est ensuite décodée en référence à la vue V_{1,2} décodée précédemment, puis est stockée dans la mémoire MT_D2 du décodeur de la figure 7B, en vue d'être utilisée pour le décodage de prochaines vues. Enfin, la vue V_{3,4} est décodée en référence à la vue V_{2,3} décodée précédemment, puis est stockée dans la mémoire MT_D2 du décodeur de la figure 7B, en vue d'être utilisée pour le décodage de prochaines vues.

Ainsi, grâce à l'invention, uniquement 4 vues de la séquence ont besoin d'être décodées en comparaison des 24 vues (6 vues de l'image multi-vues IMV₁, 6 vues de l'image multi-vues IMV₂, 6 vues de l'image multi-vues IMV₃ et 6 vues de l'image multi-vues IMV₄) qui sont nécessairement décodées par les décodeurs classiques.

A l'instant t4, le parcours de navigation de l'utilisateur d'une vue à l'autre a ainsi nécessité le décodage de seulement 9 vues en comparaison des 24 vues qui sont nécessairement décodées par les décodeurs classiques.

En relation avec le deuxième mode de réalisation du procédé de décodage de la figure 6B, il a été observé qu'il existe une relation entre le nombre de résidus de prédiction transmis dans le signal de données F2 ou F'2, lesquels dépendent du procédé de codage mis en œuvre, et la vitesse de changement de vues que l'utilisateur pourra appliquer.

Par exemple, dans le cas du parcours de décodage de la figure 8B selon lequel trois résidus de prédiction différents peuvent être alternativement utilisés pour reconstruire une vue courante V_{u,j}, l'utilisateur a la possibilité de naviguer latéralement d'une vue à l'autre, à chaque instant temporel.

Une variante du procédé de codage de la figure 6B pourra autoriser moins de souplesse, tout en restant réaliste d'un point de vue pratique.

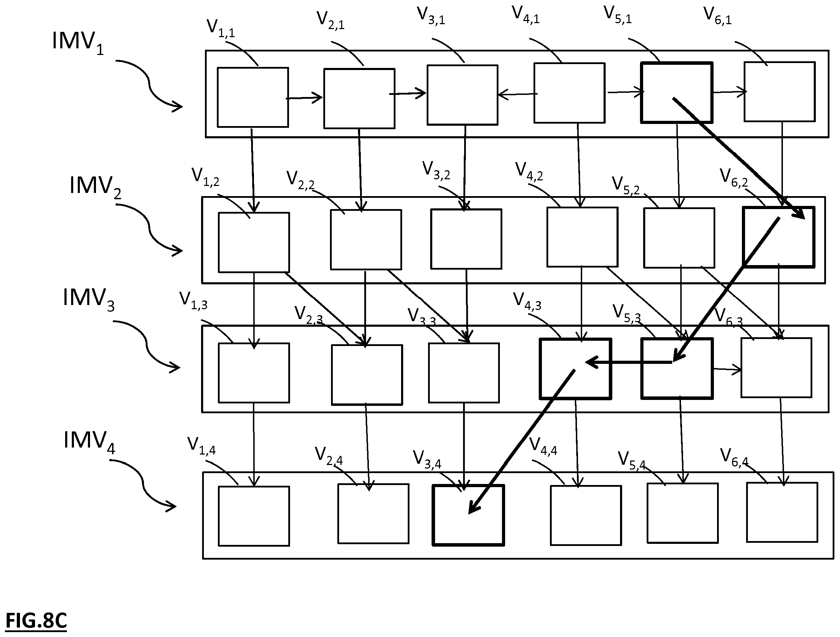

Un exemple de décodage d'au moins une vue courante V_{u,j} selon cette variante est représenté sur la figure 8C. Dans l'exemple représenté, si ladite au moins une vue courante est la vue V_{2,4}, un seul résidu de prédiction (symbolisé par la flèche entre la vue V_{2,3} et la vue V_{2,4}) peut être utilisé pour reconstruire cette vue, alors que dans l'exemple précédent de la figure 8B, trois résidus de prédiction différents pouvaient par exemple être alternativement utilisés pour reconstruire cette vue (symbolisés respectivement par la flèche entre la vue V_{1,3} et la vue V_{2,4}, la flèche entre la vue V_{2,3} et la vue V_{2,4} et la flèche entre la vue V_{3,3} et la vue V_{2,4}).

On va maintenant décrire plusieurs modes de réalisation différents qui sont appliqués à la sous-étape D21b) de détermination de parcours de décodage du procédé de décodage de la figure 6B.

Selon un premier mode de réalisation, si plusieurs parcours de décodage de vues nécessaires au décodage de ladite au moins une vue courante V_{u,j} sont possibles, c'est le parcours qui contient le moins de vues possibles supplémentaires à décoder qui est sélectionné.

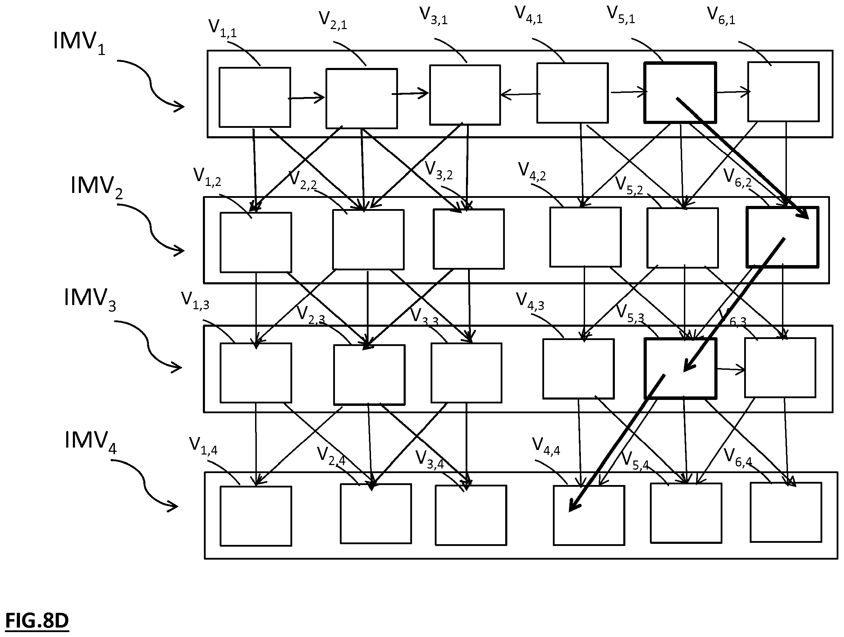

Sur la figure 8D, est représenté un tel exemple de parcours de décodage d'au moins une vue courante V_{u,j}, laquelle a été codée en référence à la figure 5B. Dans l'exemple représenté, chaque image multi-vues comprend par exemple six vues.

Dans l'exemple représenté, chaque vue courante considérée est celle que choisit de requérir successivement un utilisateur lors de sa navigation d'une vue à l'autre dans la séquence d'images multi-vues IMV₁ à IMV₄. Par exemple, il s'agit des vues V_{5,1}, V_{6,2}, V₅,₃, puis V_{4,4}. Un tel parcours de navigation est représenté en gras sur la figure 8D.

Supposons dans cet exemple que les vues V_{5,1}, V_{6,2}, V_{5,3} ont été décodées de la même manière qu'à la figure 8B et que la au moins une vue courante à décoder qui est considérée est par exemple la vue V_{4,4} que l'utilisateur souhaite visualiser. Le parcours de décodage de la vue V_{4,4} qui utilise un nombre minimal de vues supplémentaires à décoder est celui qui consiste à décoder la vue courante V_{4,4} directement à partir de la vue V_{5,3}, laquelle a été visualisée par l'utilisateur à l'instant précédent t3 et a, de ce fait, été déjà décodée et donc rendue disponible dans la mémoire tampon MT_D2 de la figure 7B.

Ainsi, dans le cas du décodage de la vue courante V_{4,4}, le parcours de décodage est grandement optimisé puisqu'il ne contient aucune vue supplémentaire à décoder.

Un tel parcours de décodage optimisé est déterminé en prenant en compte les vues déjà décodées sur le parcours de navigation d'une vue à l'autre déjà effectué par l'utilisateur, ce qui est rendu possible compte tenu de l'arborescence de décodage proposée qui peut être sélectionnée parmi plusieurs arborescences alternatives possibles.

Selon un deuxième mode de réalisation, si plusieurs parcours de décodage de vues nécessaires au décodage de la au moins une vue courante Vᵤ,ⱼ sont possibles, c'est le parcours pour lequel la distance est minimisée entre au moins une vue qui a été décodée sans référence à d'autres vues et la au moins une vue courante V_{u,j} qui est sélectionné.

Si on reprend l'exemple de la figure 8D, le parcours de décodage de la vue courante V_{4,4} qui utilise une distance minimale entre au moins une vue qui a été décodée sans référence à d'autres vues et la vue courante V_{4,4} est celui qui consiste à :
- décoder la vue V_{4,2} qui n'a pas encore été décodée, à partir de la vue V_{4,1} qui a déjà été décodée en Intra lors de la visualisation par l'utilisateur de la vue V_{5,1},
- décoder la vue V_{4,3} qui n'a pas encore été décodée, à partir de la vue V_{4,2},
- décoder la vue V_{4,4} à partir de la vue V_{4,3}.

Ainsi, grâce à ce deuxième mode de détermination du parcours de décodage de la vue courante V_{4,4}, cette dernière n'est séparée de la vue V_{4,1} décodée en Intra que de deux vues V_{4,2} et V_{4,3}, tandis que dans le premier mode de détermination mentionné précédemment, la vue V_{4,4} était séparée de la vue V_{4,1} décodée en Intra de trois vues V_{5,1}, V_{6,2} et V_{5,3}.

Le deuxième mode de détermination qui vient d'être décrit permet ainsi de réduire les artefacts qui ont tendance à s'accumuler et à se propager lors du décodage d'une vue par rapport à l'autre conformément à un mode de prédiction non intra.

Selon un troisième mode de réalisation non représenté, si le parcours de vues nécessaires au décodage de ladite au moins une vue courante, qui a été déterminé à l'issue de la sous-étape D24a) du procédé de décodage de la figure 6A ou à l'issue de la sous-étape D21b) du procédé de décodage de la figure 6B, ne permet pas de décoder ladite au moins une vue courante Vᵤ,ⱼ en raison d'au moins une contrainte de décodage, la au moins une vue courante est remplacée par une autre vue de l'image multi-vues à l'instant courant tj, qui soit apte à être décodée, ladite autre vue étant la plus proche spatialement de la au moins une vue courante.

Il est en effet possible que lors de la détermination du parcours de vues nécessaires au décodage de ladite au moins une vue courante, le décodeur ne soit pas en mesure de décoder cette dernière. Une telle situation peut par exemple se produire lorsque le décodeur est soumis à des contraintes matérielles, telles que notamment un nombre maximum NBₘₐₓ de vues pouvant être décodées, et que le parcours de vues nécessaires au décodage de ladite au moins une vue courante requiert le décodage d'un nombre de vues supérieur au nombre NBₘₐₓ. La au moins une vue courante sera alors remplacée par la vue qui lui est la plus proche spatialement et qui soit décodable conformément aux contraintes du décodeur.

Selon un quatrième mode de réalisation, le parcours de vues nécessaires au décodage de ladite au moins une vue courante V_{u,j} qui est déterminé lors de la sous-étape de détermination D24a) ou D21b) précitée contient une vue dont dépend au moins une vue susceptible d'être décodée à au moins un instant qui suit ou qui précède l'instant courant tj.

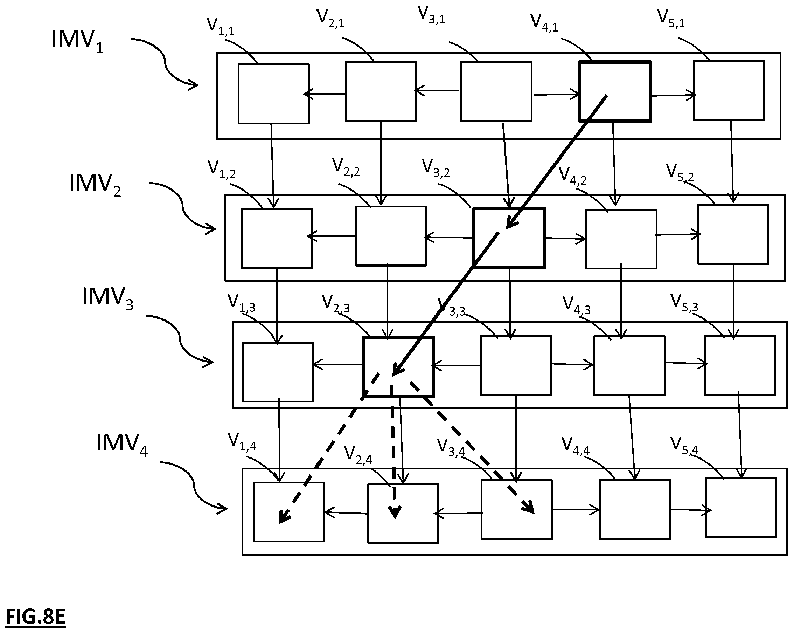

En référence maintenant à la figure 8E, est représenté un exemple de décodage d'au moins une vue courante Vᵤ,ⱼ telle que codée d'une manière similaire à celle représentée à la figure 5B (arborescences de décodage alternatives). Dans l'exemple représenté, l'image multi-vues courante IMVⱼ est la troisième image IMV₃ d'une séquence d'images multi-vues, chaque image multi-vues comprenant par exemple cinq vues. La au moins une vue courante à décoder qui est considérée dans cet exemple est par exemple la troisième vue V_{2,3} de l'image multi-vues courante IMV₃.

Sur la figure 8E, l'image V_{3,1} est décodée en intra, ce mode de décodage étant représenté par des hachures. Un exemple de parcours de navigation d'une vue à l'autre est représenté en gras sur la figure 8E. Il contient, dans l'ordre, les vues V_{4,1}, V_{3,2}, V_{2,3}. A part ces trois vues et la vue V_{3,1}, toutes les autres vues représentées n'ont pas encore été décodées.

Pour décoder la vue courante V_{2,3}, le parcours de vues nécessaires au décodage de cette dernière consiste à prendre en compte soit la vue V_{2,2} qui n'a pas encore été décodée, soit la vue V_{3,3} qui n'a pas non plus encore été décodée. Afin de faire un choix entre ces deux vues, il est analysé l'impact du décodage de chacune d'entre elles lors de la visualisation, et donc du décodage, d'une vue susceptible d'être requise par l'utilisateur à au moins un instant suivant ou précédent l'instant courant t3. Il est supposé, dans l'exemple représenté, qu'il s'agit de l'instant t4 qui suit immédiatement l'instant suivant t3. En variante, l'utilisateur pourrait souhaiter visualiser une vue à un instant précédent l'instant courant t3, l'instant t1 par exemple.

Trois parcours de navigation différents représentés en pointillé sur la figure 8E peuvent être envisagés lorsqu'une vue à l'instant suivant t4 est requise à partir de la dernière vue courante décodée V_{2,3} :
- si la vue V_{1,4} est requise, il est nécessaire, pour décoder cette vue, soit de décoder la vue V_{1,3}, soit de décoder la vue V_{2,4}, les vues V_{1,3} et V_{2,4} étant toutes les deux décodées à partir de la vue V_{2,3} qui a elle-même déjà été décodée précédemment sur le parcours de navigation de l'utilisateur et qui est disponible dans la mémoire tampon du décodeur,
- si la vue V_{2,4} est requise, la vue V_{2,4} est décodée directement à partir de la vue V_{2,3} qui a elle-même déjà été décodée précédemment sur le parcours de navigation de l'utilisateur et qui est disponible dans la mémoire tampon du décodeur,
- si la vue V_{3,4} est requise, il est nécessaire de décoder la vue V_{3,3} à partir de la vue V_{3,2} qui a elle-même déjà été décodée précédemment sur le parcours de navigation de l'utilisateur et qui est disponible dans la mémoire tampon du décodeur.

Les premier et troisième parcours ci-dessus impliquant un décodage supplémentaire de vues, c'est le deuxième parcours qui est sélectionné.

Dans une variante de ce quatrième mode de réalisation, la détermination du parcours de vues nécessaire au décodage de ladite au moins une vue courante est mise en œuvre en calculant la probabilité que telle ou telle vue à au moins un instant suivant ou précédant l'instant courant soit requise pour être décodée. Un tel calcul peut être déterminé en fonction des statistiques liées à la façon dont l'utilisateur navigue dans la séquence d'images multi-vues. Un modèle de probabilité pour les choix de vues par l'utilisateur peut être prédéfini ou bien être initialisé équiprobablement et mis à jour continuellement au cours du décodage. Le parcours sélectionné sera alors celui qui « a le plus de chance » d'être optimal ensuite, c'est-à-dire par exemple par le fait de contenir un nombre minimal de vues supplémentaires à décoder pour décoder ladite au moins une vue courante. Une autre manière de prédire que telle ou telle vue à au moins un instant suivant ou précédant l'instant courant soit requise pour être décodée consiste à anticiper le fait que l'utilisateur conserve la même direction de déplacement entre deux vues visualisées consécutivement, ces deux vues pouvant être situées au même instant ou à deux instants différents.

L'optimisation du parcours de vues nécessaires au décodage de ladite au moins une vue courante peut, selon le contexte de décodage, être mise en œuvre :
- selon l'un des différents modes de détermination de parcours qui viennent d'être décrits,
- ou bien selon une combinaison de ces différents modes.
- ou bien successivement selon un ordre de priorité prédéfini.

Dans le cas où une combinaison des différents modes de détermination de parcours est envisagée, une priorité devra être donnée à chacun d'eux. Par exemple, pour améliorer la qualité d'une vue décodée, l'optimisation du parcours se fera en priorité en appréciant la distance la plus faible entre la au moins une vue courante à décoder et une vue de la séquence d'images multi-vues qui a été décodée en intra. Dans un autre exemple, pour réduire la complexité au décodeur, la priorité sera donnée à la minimisation du nombre de vues à décoder. Selon encore un autre exemple, dans le cas d'un mode de réalisation similaire à la variante du quatrième mode de réalisation précitée où les futurs déplacements de l'utilisateur sont anticipés, en admettant que plusieurs parcours de navigation différents peuvent être envisagés lorsqu'une vue à l'instant suivant t4 est requise à partir de la dernière vue courante décodée V_{2,3} et que deux parcours de décodage sont déterminés comme étant optimaux, avec le même nombre de vues supplémentaires à décoder, l'un de ces deux parcours optimaux est finalement sélectionné en déterminant le parcours de décodage optimal à un instant suivant ou précédant l'instant t4.

Dans le cas où les différents modes de détermination de parcours respectent un ordre de priorité, lorsque deux parcours de vues sont considérés tous les deux optimaux suite à la mise en œuvre d'un premier mode de détermination prioritaire, le deuxième mode de détermination prioritaire est alors sélectionné.

Conformément à un autre mode de réalisation :
- une étape de gestion D10a) de la mémoire tampon MT_D1 de la figure 7A est mis en œuvre dans le procédé de décodage de la figure 6A, avant l'étape de décodage D2a) de ladite au moins une vue courante V_{u,j},
- et/ou une étape de gestion D10b) de la mémoire tampon MT_D2 de la figure 7B est mis en œuvre dans le procédé de décodage de la figure 6B, avant l'étape de décodage D2b) de ladite au moins une vue courante V_{u,j},.

L'étape D10a) est mise en œuvre par un dispositif de gestion MG_D1 représenté sur la figure 7A.

L'étape D10b) est mise en œuvre par un dispositif de gestion MG_D2 représenté sur la figure 7B.

Ces étapes étant optionnelles, elles sont représentées en pointillé sur les figures 6A et 6B.

Selon l'invention, au cours de l'étape de gestion D10a) ou D10b), la mémoire tampon est mise à jour :
- en fonction de la distance temporelle qui sépare les vues déjà décodées, qui sont stockées dans la mémoire tampon, de ladite au moins une vue courante à décoder,
- et/ou lorsque toutes les vues d'une image multi-vues précédant l'image multi-vues IMVⱼ courante ont été décodées.

Une telle disposition permet avantageusement d'économiser les ressources de la mémoire tampon MT_D1 ou MT_D2 qui sont limitées. Elle permet en outre de disposer de mémoires tampons désynchronisées entre le codeur et le décodeur, une telle désynchronisation étant rendue possible grâce à la mise en œuvre de l'étape de détermination du parcours de vues nécessaires au décodage de ladite au moins une vue courante et le décodage de la ou des vues non encore décodées qui ont été repérées sur le parcours déterminé.

Selon un premier exemple, les vues stockées les plus éloignées de la au moins une vue courante seront les premières à quitter la mémoire tampon. Selon un deuxième exemple, si toutes les vues d'une image multi-vues ont déjà été décodées, elles quittent automatiquement la mémoire tampon.

## Revendications

1. Procédé de décodage d'au moins une vue courante (V_{u,j}) appartenant à une image multi-vues (IMVⱼ) qui a été précédemment codée et dont les données codées sont contenues dans un signal de données, ladite au moins une vue courante représentant une perspective donnée d'une scène, ledit signal de données comprenant un ensemble de données codées représentatives d'au moins une différence entre ladite au moins une vue courante et au moins une autre vue (Vp_{u,j} ; Vp1_{u,j}, Vp2_{u,j}) de ladite image multi-vues ou d'une autre image multi-vues, ladite au moins une autre vue ayant servi à la prédiction de ladite au moins une vue courante, ledit procédé de décodage comprenant ce qui suit :
- détermination (D24a) ; D21b)), dans ledit signal de données ou dans un autre signal de données représentatif d'une autre image multi-vues, de données codées associées à au moins une vue qui est nécessaire au décodage de ladite au moins une vue courante et qui n'a pas encore été décodée, ladite au moins une vue nécessaire au décodage de ladite au moins une vue courante étant elle-même destinée à être décodée indépendamment ou bien par rapport à au moins une autre vue déjà décodée ou non, la au moins une vue nécessaire au décodage de ladite au moins une vue courante constituant une vue située sur au moins un parcours (PR_{u,j} ; PR'_{u,j}) de vues nécessaires au décodage de ladite au moins une vue courante, ledit au moins un parcours correspondant à un parcours de navigation d'une vue à l'autre, effectué par un utilisateur, pour atteindre la vue courante,
- décodage (D25a) ; D22b)) de ladite au moins une vue non encore décodée située sur ledit au moins un parcours,
ledit procédé de décodage étant **caractérisé en ce qu'**il comprend ce qui suit:
- identification (D1b)) dans le signal de données :
- de premières données codées (Vcq1_{u,j}) représentatives d'une différence entre ladite au moins une vue courante et une première vue de ladite image multi-vues ou d'une autre image multi-vues,
- au moins de deuxièmes données codées (Vcq2_{u,j}) représentatives d'une différence entre ladite au moins une vue courante et une deuxième vue de ladite image multi-vues ou d'une autre image multi-vues,
- sélection (D23b)) soit desdites premières données codées, soit desdites au moins deuxièmes données codées, ladite sélection étant mise en œuvre en fonction dudit parcours de navigation effectué,
- décodage (D2b)) de ladite au moins une vue courante à partir de ladite au moins une vue décodée sur ledit au moins un parcours et à partir de celles des premières et au moins deuxièmes données codées qui ont été sélectionnées.

2. Procédé de décodage selon la revendication 1, comprenant une détermination dudit au moins un parcours par lecture, dans le signal de données, d'informations représentatives dudit au moins un parcours.

3. Procédé de décodage selon l'une quelconque des revendications 1 à 2, dans lequel la détermination dudit au moins un parcours de vues nécessaires au décodage de ladite au moins une vue courante est mise en œuvre selon un critère de minimisation du nombre de vues situées sur ledit au moins un parcours.

4. Procédé de décodage selon l'une quelconque des revendications 1 à 2, dans lequel la détermination dudit au moins un parcours de vues nécessaires au décodage de ladite au moins une vue courante est mise en œuvre selon un critère de minimisation de la distance entre au moins une vue qui a été décodée sans référence à d'autres vues et ladite au moins une vue courante.

5. Procédé de décodage selon l'une quelconque des revendications 1 à 4, dans lequel ledit au moins un parcours déterminé contient une vue dont dépend au moins une vue susceptible d'être décodée à au moins un instant qui suit ou qui précède l'instant courant.

6. Procédé de décodage selon l'une quelconque des revendications 1 à 4, dans lequel la détermination dudit au moins un parcours est mise en œuvre en estimant, à l'aide d'un calcul de probabilités, au moins une vue susceptible d'être décodée à au moins un instant qui suit ou qui précède l'instant courant.

7. Procédé de décodage selon l'une quelconque des revendications 1 à 6, dans lequel si ledit au moins un parcours de vues nécessaires au décodage de ladite au moins une vue courante ne permet pas de décoder ladite au moins une vue courante en raison d'au moins une contrainte de décodage, ladite au moins une vue courante est remplacée par une autre vue de l'image multi-vues à l'instant courant, qui soit apte à être décodée, ladite autre vue étant la plus proche spatialement de ladite au moins une vue courante.

8. Procédé de décodage selon l'une quelconque des revendications 1 à 7, dans lequel les vues décodées et disponibles étant stockées dans une mémoire, ladite mémoire est mise à jour en fonction de la distance temporelle qui les séparent de ladite au moins une vue courante à décoder ou bien lorsque toutes les vues d'une image multi-vues précédant l'image multi-vues à l'instant courant sont décodées.

9. Dispositif de décodage d'au moins une vue courante (V_{u,j}) appartenant à une image multi-vues (IMVⱼ) qui a été précédemment codée et dont les données codées sont contenues dans un signal de données, ladite au moins une vue courante représentant une perspective donnée d'une scène, ledit signal de données comprenant un ensemble de données codées représentatives d'au moins une différence entre ladite au moins une vue courante et au moins une autre vue de ladite image multi-vues ou d'une autre image multi-vues, ladite au moins une autre vue ayant servi à la prédiction de ladite au moins une vue courante,
ledit dispositif de décodage comprenant un circuit traitement (CT_D1 ; CT_D2) qui est agencé pour mettre en œuvre ce qui suit :
- détermination, dans ledit signal de données ou dans un autre signal de données représentatif d'une autre image multi-vues, de données codées associées à au moins une vue qui est nécessaire au décodage de ladite au moins une vue courante et qui n'a pas encore été décodée, ladite au moins une vue nécessaire au décodage de ladite au moins une vue courante étant elle-même destinée à être décodée indépendamment ou bien par rapport à au moins une autre vue déjà décodée ou non, la au moins une vue nécessaire au décodage de ladite au moins une vue courante constituant une vue située sur au moins un parcours (PR_{u,j} ; PR'_{u,j}) de vues nécessaires au décodage de ladite au moins une vue courante, ledit au moins un parcours correspondant à un parcours de navigation d'une vue à l'autre, effectué par un utilisateur, pour atteindre la vue courante,
- décodage de ladite au moins une vue non encore décodée située sur ledit au moins un parcours,
ledit dispositif de décodage étant **caractérisé en ce que** le circuit de traitement est agencé pour mettre en œuvre ce qui suit:
- identification dans le signal de données :
- de premières données codées (Vcq1_{u,j}) représentatives d'une différence entre ladite au moins une vue courante et une première vue de ladite image multi-vues ou d'une autre image multi-vues,
- au moins de deuxièmes données codées (Vcq2_{u,j}) représentatives d'une différence entre ladite au moins une vue courante et une deuxième vue de ladite image multi-vues ou d'une autre image multi-vues,
- sélection soit desdites premières données codées, soit desdites au moins deuxièmes données codées, ladite sélection étant mise en œuvre en fonction dudit parcours de navigation effectué,
- décodage de ladite au moins une vue courante étant mis en œuvre à partir de ladite au moins une vue décodée sur ledit au moins un parcours et à partir de celles des premières et au moins deuxièmes données codées qui ont été sélectionnées.

10. Programme d'ordinateur comprenant des instructions de code de programme pour l'exécution des étapes du procédé de décodage selon l'une quelconque des revendications 1 à 8, lorsqu'il est exécuté sur un ordinateur.

11. Support d'enregistrement lisible par un ordinateur sur lequel est enregistré un programme d'ordinateur comprenant des instructions de code de programme pour l'exécution des étapes du procédé de décodage selon l'une quelconque des revendications 1 à 8, lorsqu'il est exécuté sur un ordinateur.

12. Procédé de codage d'au moins une image multi-vues (IMVⱼ), dans lequel est mis en œuvre le codage d'au moins une vue courante (V_{u,j}) de ladite image multi-vues, ladite au moins une vue courante représentant une perspective donnée d'une scène, comprenant :
- le codage d'un ensemble de données représentatives d'au moins une différence entre ladite au moins une vue courante et au moins une autre vue (Vp_{u,j} ; Vp1_{u,j}, Vp2_{u,j}) de ladite image multi-vues ou d'une autre image multi-vues, ladite au moins une autre vue ayant servi à la prédiction de ladite au moins une vue courante,
- le codage de données codées associées à au moins une vue qui est nécessaire au codage de ladite au moins une vue courante et qui n'est pas décodée, ladite au moins une vue nécessaire au codage de ladite au moins une vue courante étant elle-même destinée à être codée indépendamment ou bien par rapport à au moins une autre vue déjà décodée ou non, la au moins une vue nécessaire au codage de ladite au moins une vue courante constituant une vue située sur au moins un parcours (PR_{u,j} ; PR'_{u,j}) de vues nécessaires au codage de ladite au moins une vue courante, ledit au moins un parcours correspondant à un parcours de navigation d'une vue à l'autre, jusqu'à la vue courante, apte à être effectué par un utilisateur au décodage,
ledit procédé de codage étant **caractérisé en ce qu'**il met en œuvre:
- une première prédiction (C12b)) de ladite au moins une vue courante par rapport à une première vue (Vp1_{u,j}) de ladite image multi-vues ou d'une autre image multi-vues, délivrant un premier ensemble de données prédites,
- au moins une deuxième prédiction (C12b)) de ladite au moins une vue courante par rapport à une deuxième vue (Vp2_{u,j}) de ladite image multi-vues ou d'une autre image multi-vues, délivrant au moins un deuxième ensemble de données prédites,
- un codage (C15b)) du premier et du au moins deuxième ensemble de données prédites,
- une élaboration (C2b)) d'un signal de données comprenant ledit ensemble de données codées, ainsi que lesdits premier et au moins deuxième ensembles de données codés, l'un desdits premier et au moins deuxième ensembles de données codés étant apte à être utilisé pour le décodage de ladite au moins une vue courante en fonction dudit parcours de navigation effectué.

13. Dispositif de codage d'au moins une image multi-vues (IMVⱼ), comprenant un circuit de traitement (CT_C2) qui est agencé pour mettre en œuvre le codage d'au moins une vue courante de ladite image multi-vues, ladite au moins une vue courante représentant une perspective donnée d'une scène, ledit circuit de traitement mettant en œuvre le codage d'un ensemble de données représentatives d'au moins une différence entre ladite au moins une vue courante et au moins une autre vue (Vp_{u,j} ; Vp1_{u,j}, Vp2_{u,j}) de ladite image multi-vues ou d'une autre image multi-vues, ladite au moins une autre vue ayant servi à la prédiction de ladite au moins une vue courante,
- le codage de données codées associées à au moins une vue qui est nécessaire au codage de ladite au moins une vue courante et qui n'est pas décodée, ladite au moins une vue nécessaire au codage de ladite au moins une vue courante étant elle-même destinée à être codée indépendamment ou bien par rapport à au moins une autre vue déjà décodée ou non, la au moins une vue nécessaire au codage de ladite au moins une vue courante constituant une vue située sur au moins un parcours (PR_{u,j} ; PR'_{u,j}) de vues nécessaires au codage de ladite au moins une vue courante, ledit au moins un parcours correspondant à un parcours navigation d'une vue à l'autre, jusqu'à la vue courante, apte à être emprunté par un utilisateur au décodage,
ledit dispositif de codage étant **caractérisé en ce que** ledit circuit de traitement est en outre agencé pour mettre en œuvre:
- une première prédiction de ladite au moins une vue courante par rapport à une première vue de ladite image multi-vues ou d'une autre image multi-vues, délivrant un premier ensemble de données prédites,
- au moins une deuxième prédiction de ladite au moins une vue courante par rapport à une deuxième vue de ladite image multi-vues ou d'une autre image multi-vues, délivrant au moins un deuxième ensemble de données prédites,
- un codage du premier et du au moins deuxième ensemble de données prédites,
- une élaboration d'un signal de données comprenant ledit ensemble de données codées, ainsi que lesdits premier et au moins deuxième ensembles de données codés,
l'un desdits premier et au moins deuxième ensembles de données codés étant apte à être utilisé pour le décodage de ladite au moins une vue courante en fonction dudit parcours de navigation emprunté.

14. Programme d'ordinateur comprenant des instructions de code de programme pour l'exécution des étapes du procédé de codage selon la revendication 12, lorsqu'il est exécuté sur un ordinateur.

## Patentansprüche

1. Verfahren zur Decodierung mindestens einer aktuellen Ansicht (V_{u,j}), die zu einem Bild mit Mehrfachansicht (IMVⱼ) gehört, die zuvor codiert wurde und deren codierte Daten in einem Datensignal enthalten sind, wobei die mindestens eine aktuelle Ansicht eine gegebene Perspektive einer Szene darstellt, wobei das Datensignal einen Satz codierter Daten beinhaltet, die für mindestens einen Unterschied zwischen der mindestens einen aktuellen Ansicht und mindestens einer anderen Ansicht (V_{pu,j}; Vp1_{u,j}, Vp2_{u,j}) des Bildes mit Mehrfachansicht oder eines anderen Bildes mit Mehrfachansicht repräsentativ sind, wobei die mindestens eine andere Ansicht zur Vorhersage der mindestens einen aktuellen Ansicht gedient hat, wobei das Decodierungsverfahren Folgendes beinhaltet:
- Bestimmung (D24a); D21b)), in dem Datensignal oder in einem anderen Datensignal, das für ein anderes Bild mit Mehrfachansicht repräsentativ ist, von codierten Daten, die mit mindestens einer Ansicht assoziiert sind, die zur Decodierung der mindestens einen aktuellen Ansicht erforderlich ist und die noch nicht decodiert wurde, wobei die mindestens eine Ansicht, die zur Decodierung der mindestens einen aktuellen Ansicht erforderlich ist, selber dazu bestimmt ist, decodiert zu werden, entweder unabhängig oder aber mit Bezug auf mindestens eine andere Ansicht, die bereits decodiert wurde oder nicht, wobei die mindestens eine Ansicht, die zur Decodierung der mindestens einen aktuellen Ansicht erforderlich ist, eine Ansicht darstellt, die sich in mindestens einem Verlauf (PR_{u,j}; PR'_{u,j}) von Ansichten befindet, die zur Decodierung der mindestens einen aktuellen Ansicht erforderlich sind, wobei der mindestens eine Verlauf einem Navigationsverlauf von einer Ansicht zur nächsten entspricht, der von einem Benutzer vorgenommen wird, um die aktuelle Ansicht zu erreichen,
- Decodierung (D25a); D22b)) der mindestens einen, noch nicht decodierten Ansicht, die sich in dem mindestens einen Verlauf befindet,
wobei das Decodierungsverfahren **dadurch gekennzeichnet ist, dass** es Folgendes beinhaltet:
- Identifikation (D1b)), in dem Datensignal:
- von ersten codierten Daten (Vcq1_{u,j}), die für einen Unterschied zwischen der mindestens einen aktuellen Ansicht und einer ersten Ansicht des Bildes mit Mehrfachansicht oder eines anderen Bildes mit Mehrfachansicht repräsentativ sind,
- von mindestens zweiten codierten Daten (Vcq2_{u,j}), die für einen Unterschied zwischen der mindestens einen aktuellen Ansicht und einer zweiten Ansicht des Bildes mit Mehrfachansicht oder eines anderen Bildes mit Mehrfachansicht repräsentativ sind,
- Auswahl (D23b)) entweder der ersten codierten Daten oder der mindestens zweiten codierten Daten, wobei die Auswahl in Abhängigkeit von dem vorgenommenen Navigationsverlauf umgesetzt wird,
- Decodierung (D2b)) der mindestens einen aktuellen Ansicht ausgehend von der mindestens einen decodierten Ansicht in dem mindestens einen Verlauf und ausgehend von denen der ersten und mindestens zweiten codierten Daten, die ausgewählt wurden.

2. Decodierungsverfahren nach Anspruch 1, beinhaltend eine Bestimmung des mindestens einen Verlaufs durch das Lesen, in dem Datensignal, von Informationen, die für den mindestens einen Verlauf repräsentativ sind.

3. Decodierungsverfahren nach einem der Ansprüche 1 bis 2, wobei die Bestimmung des mindestens einen Verlaufs von Ansichten, die zur Decodierung der mindestens einen aktuellen Ansicht erforderlich sind, gemäß einem Kriterium zur Minimierung der Anzahl von Ansichten, die sich in dem mindestens einen Verlauf befinden, umgesetzt wird.

4. Decodierungsverfahren nach einem der Ansprüche 1 bis 2, wobei die Bestimmung des mindestens einen Verlaufs von Ansichten, die zur Decodierung der mindestens einen aktuellen Ansicht erforderlich sind, gemäß einem Kriterium zur Minimierung des Abstands zwischen mindestens einer Ansicht, die ohne Bezug auf andere Ansichten decodiert wurde, und der mindestens einen aktuellen Ansicht umgesetzt wird.

5. Decodierungsverfahren nach einem der Ansprüche 1 bis 4, wobei der mindestens eine bestimmte Verlauf eine Ansicht enthält, von der mindestens eine Ansicht abhängt, die zu mindestens einem Zeitpunkt, der dem aktuellen Zeitpunkt folgt oder ihm vorausgeht, decodiert werden kann.

6. Decodierungsverfahren nach einem der Ansprüche 1 bis 4, wobei die Bestimmung des mindestens einen Verlaufs umgesetzt wird, indem mit Hilfe einer Wahrscheinlichkeitsberechnung mindestens eine Ansicht ermittelt wird, die zu mindestens einem Zeitpunkt, der dem aktuellen Zeitpunkt folgt oder ihm vorausgeht, decodiert werden kann.

7. Decodierungsverfahren nach einem der Ansprüche 1 bis 6, wobei, wenn es der mindestens eine Verlauf von Ansichten, die zur Decodierung der mindestens einen aktuellen Ansicht erforderlich sind, aufgrund mindestens einer Decodierungsbeschränkung nicht gestattet, die mindestens eine aktuelle Ansicht zu decodieren, die mindestens eine aktuelle Ansicht durch eine andere Ansicht des Bildes mit Mehrfachansicht zu dem aktuellen Zeitpunkt ersetzt wird, die dazu fähig ist, decodiert zu werden, wobei die andere Ansicht der mindestens einen aktuellen Ansicht räumlich am nächsten ist.

8. Decodierungsverfahren nach einem der Ansprüche 1 bis 7, wobei die decodierten und verfügbaren Ansichten in einem Speicher gespeichert werden, wobei der Speicher in Abhängigkeit von dem zeitlichen Abstand, der diese von der mindestens einen zu decodierenden aktuellen Ansicht trennt, aktualisiert wird, oder aber dann, wenn alle Ansichten eines Bildes mit Mehrfachansicht, das dem Bild mit Mehrfachansicht zu dem aktuellen Zeitpunkt vorausgeht, decodiert sind.

9. Vorrichtung zur Decodierung mindestens einer aktuellen Ansicht (V_{u,j}), die zu einem Bild mit Mehrfachansicht (IMVⱼ) gehört, die zuvor codiert wurde und deren codierte Daten in einem Datensignal enthalten sind, wobei die mindestens eine aktuelle Ansicht eine gegebene Perspektive einer Szene darstellt, wobei das Datensignal einen Satz codierter Daten beinhaltet, die für mindestens einen Unterschied zwischen der mindestens einen aktuellen Ansicht und mindestens einer anderen Ansicht des Bildes mit Mehrfachansicht oder eines anderen Bildes mit Mehrfachansicht repräsentativ sind, wobei die mindestens eine andere Ansicht zur Vorhersage der mindestens einen aktuellen Ansicht gedient hat,
wobei die Decodierungsvorrichtung eine Verarbeitungsschaltung (CT_D1; CT_D2) beinhaltet, die dazu angeordnet ist, Folgendes umzusetzen:
- Bestimmung, in dem Datensignal oder in einem anderen Datensignal, das für ein anderes Bild mit Mehrfachansicht repräsentativ ist, von codierten Daten, die mit mindestens einer Ansicht assoziiert sind, die zur Decodierung der mindestens einen aktuellen Ansicht erforderlich ist und die noch nicht decodiert wurde, wobei die mindestens eine Ansicht, die zur Decodierung der mindestens einen aktuellen Ansicht erforderlich ist, selber dazu bestimmt ist, decodiert zu werden, entweder unabhängig oder aber mit Bezug auf mindestens eine andere Ansicht, die bereits decodiert wurde oder nicht, wobei die mindestens eine Ansicht, die zur Decodierung der mindestens einen aktuellen Ansicht erforderlich ist, eine Ansicht darstellt, die sich in mindestens einem Verlauf (PR_{u,j}; PR'_{u,j}) von Ansichten befindet, die zur Decodierung der mindestens einen aktuellen Ansicht erforderlich sind, wobei der mindestens eine Verlauf einem Navigationsverlauf von einer Ansicht zur nächsten entspricht, der von einem Benutzer vorgenommen wird, um die aktuelle Ansicht zu erreichen,
- Decodierung der mindestens einen, noch nicht decodierten Ansicht, die sich in dem mindestens einen Verlauf befindet,
wobei die Decodierungsvorrichtung **dadurch gekennzeichnet ist, dass** die Verarbeitungsschaltung dazu angeordnet ist, Folgendes umzusetzen:
- Identifikation, in dem Datensignal:
- von ersten codierten Daten (Vcq1_{u,j}), die für einen Unterschied zwischen der mindestens einen aktuellen Ansicht und einer ersten Ansicht des Bildes mit Mehrfachansicht oder eines anderen Bildes mit Mehrfachansicht repräsentativ sind,
- von mindestens zweiten codierten Daten (Vcq2_{u,j}), die für einen Unterschied zwischen der mindestens einen aktuellen Ansicht und einer zweiten Ansicht des Bildes mit Mehrfachansicht oder eines anderen Bildes mit Mehrfachansicht repräsentativ sind,
- Auswahl entweder der ersten codierten Daten oder der mindestens zweiten codierten Daten, wobei die Auswahl in Abhängigkeit von dem vorgenommenen Navigationsverlauf umgesetzt wird,
- Decodierung der mindestens einen aktuellen Ansicht, die ausgehend von der mindestens einen decodierten Ansicht in dem mindestens einen Verlauf und ausgehend von denen der ersten und mindestens zweiten codierten Daten, die ausgewählt wurden, umgesetzt wird.

10. Computerprogramm, das Programmcodeanweisungen zur Ausführung der Schritte des Decodierungsverfahrens nach einem der Ansprüche 1 bis 8 beinhaltet, wenn es auf einem Computer ausgeführt wird.

11. Computerlesbares Aufzeichnungsmedium, auf dem ein Computerprogramm aufgezeichnet ist, das Programmcodeanweisungen zur Ausführung der Schritte des Decodierungsverfahrens nach einem der Ansprüche 1 bis 8 beinhaltet, wenn es auf einem Computer ausgeführt wird.

12. Verfahren zur Codierung mindestens eines Bildes mit Mehrfachansicht (IMVⱼ), bei dem die Codierung mindestens einer aktuellen Ansicht (V_{u,j}) des Bildes mit Mehrfachansicht umgesetzt wird, wobei die mindestens eine aktuelle Ansicht eine gegebene Perspektive einer Szene darstellt, beinhaltend:
- die Codierung eines Satzes Daten, die für mindestens einen Unterschied zwischen der mindestens einen aktuellen Ansicht und mindestens einer anderen Ansicht (Vp_{u,j}; Vpl_{u,j}, Vp2_{u,j}) des Bildes mit Mehrfachansicht oder eines anderen Bildes mit Mehrfachansicht repräsentativ sind, wobei die mindestens eine andere Ansicht zur Vorhersage der mindestens einen aktuellen Ansicht gedient hat,
- die Codierung von codierten Daten, die mit mindestens einer Ansicht assoziiert sind, die zur Codierung der mindestens einen aktuellen Ansicht erforderlich ist und die nicht decodiert ist, wobei die mindestens eine Ansicht, die zur Codierung der mindestens einen aktuellen Ansicht erforderlich ist, selber dazu bestimmt ist, codiert zu werden, entweder unabhängig oder aber mit Bezug auf mindestens eine andere Ansicht, die bereits decodiert wurde oder nicht, wobei die mindestens eine Ansicht, die zur Codierung der mindestens einen aktuellen Ansicht erforderlich ist, eine Ansicht darstellt, die sich in mindestens einem Verlauf (PR_{u,j}; PR'_{u,j}) von Ansichten befindet, die zur Codierung der mindestens einen aktuellen Ansicht erforderlich sind, wobei der mindestens eine Verlauf einem Navigationsverlauf von einer Ansicht zur nächsten bis zur aktuellen Ansicht entspricht, der von einem Benutzer bei der Decodierung vorgenommen werden kann,
wobei das Codierungsverfahren **dadurch gekennzeichnet ist, dass** es Folgendes umsetzt:
- eine erste Vorhersage (C12b)) der mindestens einen aktuellen Ansicht mit Bezug auf eine erste Ansicht (Vp1_{u,j}) des Bildes mit Mehrfachansicht oder eines anderen Bildes mit Mehrfachansicht, was einen ersten Satz vorhergesagter Daten ergibt,
- mindestens eine zweite Vorhersage (C12b)) der mindestens einen aktuellen Ansicht mit Bezug auf eine zweite Ansicht (Vp2_{u,j}) des Bildes mit Mehrfachansicht oder eines anderen Bildes mit Mehrfachansicht, was mindestens einen zweiten Satz vorhergesagter Daten ergibt,
- eine Codierung (C15b)) des ersten und des mindestens zweiten Satzes vorhergesagter Daten,
- eine Erstellung (C2b)) eines Datensignals, das den Satz codierter Daten sowie den ersten und mindestens zweiten Satz codierter Daten beinhaltet,
wobei einer von dem ersten und mindestens zweiten Satz codierter Daten dazu fähig ist, in Abhängigkeit von dem vorgenommenen Navigationsverlauf zur Decodierung der mindestens einen aktuellen Ansicht verwendet zu werden.

13. Vorrichtung zur Codierung mindestens eines Bildes mit Mehrfachansicht (IMVⱼ), beinhaltend eine Verarbeitungsschaltung (CT_C2), die dazu angeordnet ist, die Codierung mindestens einer aktuellen Ansicht des Bildes mit Mehrfachansicht umzusetzen, wobei die mindestens eine aktuelle Ansicht eine gegebene Perspektive einer Szene darstellt, wobei die Verarbeitungsschaltung die Codierung eines Satz Daten umsetzt, die für mindestens einen Unterschied zwischen der mindestens einen aktuellen Ansicht und mindestens einer anderen Ansicht (Vp_{u,j}; Vp1_{u,j}, Vp2_{u,j}) des Bildes mit Mehrfachansicht oder eines anderen Bildes mit Mehrfachansicht repräsentativ sind, wobei die mindestens eine andere Ansicht zur Vorhersage der mindestens einen aktuellen Ansicht gedient hat,
- die Codierung von codierten Daten, die mit mindestens einer Ansicht assoziiert sind, die zur Codierung der mindestens einen aktuellen Ansicht erforderlich ist und die nicht decodiert ist, wobei die mindestens eine Ansicht, die zur Codierung der mindestens einen aktuellen Ansicht erforderlich ist, selber dazu bestimmt ist, codiert zu werden, entweder unabhängig oder aber mit Bezug auf mindestens eine andere Ansicht, die bereits decodiert wurde oder nicht, wobei die mindestens eine Ansicht, die zur Codierung der mindestens einen aktuellen Ansicht erforderlich ist, eine Ansicht darstellt, die sich in mindestens einem Verlauf (PR_{u,j}; PR'_{u,j}) von Ansichten befindet, die zur Codierung der mindestens einen aktuellen Ansicht erforderlich sind, wobei der mindestens eine Verlauf einem Navigationsverlauf von einer Ansicht zur nächsten bis zur aktuellen Ansicht entspricht, der von einem Benutzer bei der Decodierung genommen werden kann,
wobei die Codierungsvorrichtung **dadurch gekennzeichnet ist, dass** die Verarbeitungsschaltung ferner dazu angeordnet ist, Folgendes umzusetzen:
- eine erste Vorhersage der mindestens einen aktuellen Ansicht mit Bezug auf eine erste Ansicht des Bildes mit Mehrfachansicht oder eines anderen Bildes mit Mehrfachansicht, was einen ersten Satz vorhergesagter Daten ergibt,
- mindestens eine zweite Vorhersage der mindestens einen aktuellen Ansicht mit Bezug auf eine zweite Ansicht des Bildes mit Mehrfachansicht oder eines anderen Bildes mit Mehrfachansicht, was mindestens einen zweiten Satz vorhergesagter Daten ergibt,
- eine Codierung des ersten und des mindestens zweiten Satzes vorhergesagter Daten,
- eine Erstellung eines Datensignals, das den Satz codierter Daten sowie den ersten und mindestens zweiten Satz codierter Daten beinhaltet,
wobei einer von dem ersten und mindestens zweiten Satz codierter Daten dazu fähig ist, in Abhängigkeit von dem genommenen Navigationsverlauf zur Decodierung der mindestens einen aktuellen Ansicht verwendet zu werden.

14. Computerprogramm, das Programmcodeanweisungen zur Ausführung der Schritte des Codierungsverfahrens nach Anspruch 12 beinhaltet, wenn es auf einem Computer ausgeführt wird.

## Claims

1. Method for decoding at least one current view (V_{u,j}) belonging to a multi-view image (IMVⱼ) which has been previously coded and the coded data of which are contained in a data signal, said at least one current view representing a given perspective of a scene, said data signal comprising a set of coded data representative of at least one difference between said at least one current view and at least one other view (Vp_{u,j}; Vp1_{u,j}, Vp2_{u,j}) of said multi-view image or of another multi-view image, said at least one other view having served for the prediction of said at least one current view, said decoding method comprising the following:
- determination (D24a); D21b)), in said data signal or in another data signal representative of another multi-view image, of coded data associated with at least one view which is necessary for the decoding of said at least one current view and which has not yet been decoded, said at least one view necessary for the decoding of said at least one current view being itself intended to be decoded independently or else with respect to at least one other view that may or may not already have been decoded, the at least one view necessary for the decoding of said at least one current view constituting a view situated on at least one pathway (PR_{u,j}; PR'_{u,j}) of views that are necessary for the decoding of said at least one current view, said at least one pathway corresponding to a pathway of navigation from one view to another taken by a user to reach the current view,
- decoding (D25a); D22b)) of said at least one view that has not yet been decoded and is situated on said at least one pathway,
said decoding method being **characterized in that** it comprises the following:
- identification (D1b)), in the data signal:
- of first coded data (Vcq1_{u,j}) representative of a difference between said at least one current view and a first view of said multi-view image or of another multi-view image,
- at least of second coded data (Vcq2_{u,j}) representative of a difference between said at least one current view and a second view of said multi-view image or of another multi-view image,
- selection (D23b)) either of said first coded data, or of said at least second coded data, said selection being implemented on the basis of said navigation pathway taken,
- decoding (D2b)) of said at least one current view on the basis of said at least one decoded view on said at least one pathway and on the basis of those of the first and at least second coded data that have been selected.

2. Decoding method according to Claim 1, comprising determination of said at least one pathway by reading, in the data signal, information representative of said at least one pathway.

3. Decoding method according to either one of Claims 1 and 2, wherein the determination of said at least one pathway of views that are necessary for the decoding of said at least one current view is implemented according to a criterion of minimizing the number of views situated on said at least one pathway.

4. Decoding method according to either one of Claims 1 and 2, wherein the determination of said at least one pathway of views that are necessary for the decoding of said at least one current view is implemented according to a criterion of minimizing the distance between at least one view which has been decoded without reference to other views and said at least one current view.

5. Decoding method according to any one of Claims 1 to 4, wherein said at least one determined pathway contains a view on which there depends at least one view liable to be decoded at at least one instant which follows or which precedes the current instant.

6. Decoding method according to any one of Claims 1 to 4, wherein the determination of said at least one pathway is implemented by estimating, with the aid of a probability calculation, at least one view liable to be decoded at at least one instant which follows or which precedes the current instant.

7. Decoding method according to any one of Claims 1 to 6, wherein if said at least one pathway of views that are necessary for the decoding of said at least one current view does not make it possible to decode said at least one current view because of at least one decoding constraint, said at least one current view is replaced with another view of the multi-view image at the current instant, which is able to be decoded, said other view being the one spatially closest to said at least one current view.

8. Decoding method according to any one of Claims 1 to 7, wherein, the decoded and available views being stored in a memory, said memory is updated as a function of the temporal distance separating them from said at least one current view to be decoded or else when all the views of a multi-view image preceding the multi-view image at the current instant are decoded.

9. Device for decoding at least one current view (V_{u,j}) belonging to a multi-view image (IMVⱼ) which has been previously coded and the coded data of which are contained in a data signal, said at least one current view representing a given perspective of a scene, said data signal comprising a set of coded data representative of at least one difference between said at least one current view and at least one other view of said multi-view image or of another multi-view image, said at least one other view having served for the prediction of said at least one current view,
said decoding device comprising a processing circuit (CT_D1; CT_D2) which is designed to implement the following:
- determination, in said data signal or in another data signal representative of another multi-view image, of coded data associated with at least one view which is necessary for the decoding of said at least one current view and which has not yet been decoded, said at least one view necessary for the decoding of said at least one current view being itself intended to be decoded independently or else with respect to at least one other view that may or may not already have been decoded, the at least one view necessary for the decoding of said at least one current view constituting a view situated on at least one pathway (PR_{u,j}; PR'_{u,j}) of views that are necessary for the decoding of said at least one current view, said at least one pathway corresponding to a pathway of navigation from one view to another taken by a user to reach the current view,
- decoding of said at least one view that has not yet been decoded and is situated on said at least one pathway, said decoding device being **characterized in that** the processing circuit is designed to implement the following:
- identification, in the data signal:
- of first coded data (Vcq1_{u,j}) representative of a difference between said at least one current view and a first view of said multi-view image or of another multi-view image,
- at least of second coded data (Vcq2_{u,j}) representative of a difference between said at least one current view and a second view of said multi-view image or of another multi-view image,
- selection either of said first coded data, or of said at least second coded data, said selection being implemented on the basis of said navigation pathway taken,
- decoding of said at least one current view being implemented on the basis of said at least one decoded view on said at least one pathway and on the basis of those of the first and at least second coded data that have been selected.

10. Computer program comprising program code instructions for executing the steps of the decoding method according to any one of Claims 1 to 8 when it is executed on a computer.

11. Computer-readable recording medium on which there is recorded a computer program comprising program code instructions for executing the steps of the decoding method according to any one of Claims 1 to 8 when it is executed on a computer.

12. Method for coding at least one multi-view image (IMVⱼ), wherein the coding of at least one current view (V_{u,j}) of said multi-view image is implemented, said at least one current view representing a given perspective of a scene, comprising:
- the coding of a set of data representative of at least one difference between said at least one current view and at least one other view (Vp_{u,j}; Vp1_{u,j}, Vp2_{u,j}) of said multi-view image or of another multi-view image, said at least one other view having served for the prediction of said at least one current view,
- the coding of coded data associated with at least one view which is necessary for the coding of said at least one current view and which is not decoded, said at least one view necessary for the coding of said at least one current view being itself intended to be coded independently or else with respect to at least one other view that may or may not already have been decoded, the at least one view necessary for the coding of said at least one current view constituting a view situated on at least one pathway (PR_{u,j}; PR'_{u,j}) of views that are necessary for the coding of said at least one current view, said at least one pathway corresponding to a pathway of navigation from one view to another up to the current view, which is able to be taken by a user during decoding,
said coding method being **characterized in that** it implements:
- a first prediction (C12b)) of said at least one current view with respect to a first view (Vp1_{u,j}) of said multi-view image or of another multi-view image, delivering a first set of predicted data,
- at least one second prediction (C12b)) of said at least one current view with respect to a second view (Vp2_{u,j}) of said multi-view image or of another multi-view image, delivering at least one second set of predicted data,
- coding (C15b)) of the first and of the at least second set of predicted data,
- formulation (C2b)) of a data signal comprising said set of coded data, and also said first and at least second sets of coded data,
one of said first and at least second sets of coded data being able to be used for the decoding of said at least one current view on the basis of said navigation pathway taken.

13. Device for coding at least one multi-view image (IMVⱼ), comprising a processing circuit (CT_C2) which is designed to implement the coding of at least one current view of said multi-view image, said at least one current view representing a given perspective of a scene, said processing circuit implementing the coding of a set of data representative of at least one difference between said at least one current view and at least one other view (Vp_{u,j}; Vp1_{u,j}, Vp2_{u,j}) of said multi-view image or of another multi-view image, said at least one other view having served for the prediction of said at least one current view,
- the coding of coded data associated with at least one view which is necessary for the coding of said at least one current view and which is not decoded, said at least one view necessary for the coding of said at least one current view being itself intended to be coded independently or else with respect to at least one other view that may or may not already have been decoded, the at least one view necessary for the coding of said at least one current view constituting a view situated on at least one pathway (PR_{u,j}; PR'_{u,j}) of views that are necessary for the coding of said at least one current view, said at least one pathway corresponding to a pathway of navigation from one view to another up to the current view, which is able to be followed by a user during decoding,
said coding device being **characterized in that** said processing circuit is furthermore designed to implement:
- a first prediction of said at least one current view with respect to a first view of said multi-view image or of another multi-view image, delivering a first set of predicted data,
- at least one second prediction of said at least one current view with respect to a second view of said multi-view image or of another multi-view image, delivering at least one second set of predicted data,
- coding of the first and of the at least second set of predicted data,
- formulation of a data signal comprising said set of coded data, and also said first and at least second sets of coded data,
one of said first and at least second sets of coded data being able to be used for the decoding of said at least one current view on the basis of said followed navigation pathway.

14. Computer program comprising program code instructions for executing the steps of the coding method according to Claim 12 when it is executed on a computer.
